# EUROPÄISCHE PATENTANMELDUNG

(11) **EP 2 272 787 A1**
(43) Veröffentlichungstag der Anmeldung: **12.01.2011**
(21) Anmeldenummer: 10012647.3
(22) Anmeldetag: 19.05.2004
(51) Int. Cl.: B66F 9/14, B66F 9/07, B65G 1/04

(54) **Teleskopschubarm, insbesondere für ein Lastaufnahmemittel**

(30) Priorität: 20.05.2003 AT 7782003
(62) Teilanmeldung aus: 04733730.8
(71) Anmelder: TGW Transportgeräte GmbH, 4600 Wels (AT)
(72) Erfinder: Hansl, Rudolf, 4020 Linz (AT); Reischl, Josef, 4623 Gunskirchen (AT)
(74) Vertreter: Secklehner, Günter

(57) **Zusammenfassung**

Die Erfindung bezieht sich auf einen Teleskopschubarm (11a,11b) für eine auf einer vertikal verstellbaren Hubplattform (8) eines Förderfahrzeuges angeordnete Lastaufnahmevorrichtung (9) zum Ein- bzw. Auslagern eines Ladehilfsmittels (12) in ein bzw. aus einem Regallager (3b), mit einem Tragrahmen (14a,14b) und einem zu diesem relativ verstellbaren Schlitten (15a,15b), der mit einem Stellantrieb (50a bis 50e) und/oder einem Sensor (51) versehen ist, wobei der Stellantrieb (50a bis 50f) und/oder Sensor (51) über ein Übertragungsmittel (60) für elektrische Energie und/oder elektrische Signale mit einer im Bereich des Tragrahmens (14a,14b) angeordneten, elektrischen Schnittstelle (52) verbunden ist Das Übertragungsmittel (20) für Energie und/oder Signale ist durch eine Sender- und/oder Empfangseinheit (61,62) gebildet, wobei die Energie- und/oder Signalübertragung von der Schnittstelle (52) zum Stellantrieb (50a bis 50e) und/oder Sensor (51) aufberührungslosem, insbesondere elektromagnetischem, Wege erfolgt.

## Beschreibung

Die Erfindung betrifft einen Teleskopschubarm für eine Lastaufnahmevorrichtung zum Einund Auslagern eines Ladehilfsmittels in ein bzw. aus einem Regallager und eine Lastaufnahmevorrichtung, wie in den Oberbegriffen der Ansprüche 1 und 15 beschrieben.

Aus der US 2003/0185656 A1 ist ein gattungsgemäßer Teleskopschubarm einer Lastaufnahmevorrichtung zum Ein- und Auslagern eines quaderförmigen Ladehilfsmittels in ein bzw. aus einem Regallager bekannt, der einen Tragrahmen, einen mittleren Zwischenschlitten und einen äußeren Schlitten umfasst, die zu dem Tragrahmen und zueinander relativ verstellbar sind. Der äußere Schlitten ist mit quer zur Längserstreckung des Teleskopschubarmes verschwenkbaren Mitnehmerelementen versehen, die jeweils mit einem Stellantrieb (Aktuator) gekuppelt und denen Sensoren zur Überwachung ihrer Betriebsstellungen zugeordnet sind. Die Sensoren und/oder Aktuatoren sind am äußeren Schlitten angeordnet. Die Versorgung dieser Sensoren und/oder Aktuatoren mit elektrischer Energie, erfolgt mittels elektrisch leitender Verbindungen, wie beispielsweise Drahtleitungen. Diese Drahtleitungen sind in Energieketten verlegt, die ausgehend von einer im Bereich des Tragrahmens angeordneten Schnittstelle (Versorgungsquelle) seitlich neben dem Teleskopschubarm zu Anschlüssen der Sensoren und/oder Aktuatoren führen. Der Nachteil dieser Lösung ist, dass selbst die kleinsten Energieketten einen relativ großen Mindestradius benötigen, um die Lebensdauer der Drahtleitungen relativ hoch zu halten. Dadurch bedingt, ergibt sich ein relativ großer Einbauraum und kann deshalb die heute zunehmend gestellte Anforderung, eine Lastaufuahmevorrichtung möglichst kompakt und kleinbauend herzustellen, nicht erfüllt werden.

Eine weitere bekannte Ausführung besteht darin, dass die Energieversorgung der Sensoren und/oder Aktuatoren am äußeren Schlitten durch eine kompakte Kabeltrommel mit Schleifringkörper realisiert ist. Der Nachteil dieser Lösung ist die große Baugröße aufgrund des Mindestkabeldurchmessers, sowie das hohe Gewicht und die relativ hohen Kosten. Ausführungen dieser Art können nur bei größeren Bauarten von Teleskopschubarmen eingesetzt werden.

Eine weitere, sehr platzsparende Ausführung für ein Übertragungsmittel zur Versorgung der Sensoren und/oder Aktuatoren am äußeren Schlitten eines Teleskopschubarmes mit elektrischer Energie, ist ebenfalls aus der US 2003/0185656 A1 bekannt, bei der die Stahilitzen der Zahnriemen für die Ein- und Ausfahrbewegung des mittleren Zwischenschlittens und äußeren Schlittens gleichzeitig als Übertragungsmittel für die elektrische Energie genützt wird und so eine sehr platzsparende und kostengünstige Energieversorgung möglich ist. Der Nachteil dieser Lösung ist aber, dass diese Anordnung aus funktionalen Gründen nur für Teleskopschubarme mit nur einem bewegbaren Schlitten oder maximal einem Zwischenschlitten und äußeren Schlitten realisierbar ist.

Aufgabe der vorliegenden Erfindung ist es, einen Teleskopschubarm zur Lastaufgabe oder Lastabgabe und eine Lastaufnahmevorrichtung zu schaffen, welche(r) eine sichere Energieübertragung zwischen einer auf einer Hubplattform eines Förderfahrzeuges angeordneten Schnittstelle und einem Sensor und/oder Aktuator auf einem ausfahrbaren Schlitten ermöglicht und sich durch eine einfache, kompakte sowie wartungsarme Bauform auszeichnet.

Die Aufgabe der Erfindung wird durch die Merkmale der Ansprüche 1 und 15 gelöst. Die Vorteile dabei sind, dass die elektrische Energie und/oder Signale zwischen einer auf der Hubplattform angeordneten Schnittstelle und einem am äußeren Schlitten angeordneten Aktuator und/oder Sensor auf drahtlosem Wege berührungsfrei übertragbar ist und deshalb ein mechanischer Verschleiß vermieden wird und die Wartungsarbeiten am Teleskopschubarm minimiert werden. Dazu kommt, dass die am Tragrahmen und Schlitten einander gegenüberliegend angeordneten Sender- und/oder Empfangseinheiten um einen Luftspalt in geringem Abstand voneinander distanziert sind und deshalb die Anforderungen an die Toleranzen der zwischen Tragrahmen und Schlitten angeordneten Linearführungen gering sind und dennoch der Vorteil einer sicheren Energiezufuhr und/oder Signal- bzw. Datenübertragung zwischen den Sender- und/oder Empfangseinheiten erhalten bleibt. Weiters ist von Vorteil, dass auch unter den harten Umgebungsbedingungen, wie Staub und dgl., ein uneingeschränkter Einsatz des Teleskopschubarmes möglich ist.

Die Ausgestaltungen nach den Ansprüchen 2 bis 6 sind vorteilhaft, da durch die wechselweise Anordnung der Sender- und/oder Empfangseinheiten am Tragrahmen oder Schlitten, eine flexible Anpassung an die einsatzbedingten Erfordernisse möglich ist, ohne die kompakten Einbaumaße verändern zu müssen. Kann der Teleskopschubarm in Bezug auf die Hubplattform nach beide Richtung ausgefahren werden, ist der Tragrahmen oder Schlitten mit wenigstens zwei Sender- und/oder Empfangseinheiten ausgestattet, die möglichst nahe zu den stirnseitigen Endbereichen des Tragrahmens oder Schlittens angebracht sind, sodass eine Ausfahrweite vom Schlitten selbst bei dieser kompakten Bauweise des Teleskopschubarmes nicht eingeschränkt wird. Von Vorteil ist auch der modulare Aufbau des die Sender- und/oder Empfangseinheiten aufweisenden Übertragungsmittels.

Die Ausgestaltungen nach den Ansprüchen 7 und 8 sind von Vorteil, da nun der mehrfach teleskopierbare Teleskopschubarm soweit ausfahren kann, dass Ladehilfsmitteln sowohl am in Ausfahrrichtung des Teleskopschubarmes gassennahen, vorderen als auch am gassenfernen, hinteren Abstellplatz im Regallager ein- bzw. auslagert werden können. Die Regallager sind dabei entweder nur auf einer Seite neben einem Förderfahrzeug oder zu beiden Seiten vom Förderfahrzeug aufgestellt, wobei dann der Teleskopschubarm nur nach eine Richtung oder nach beide Richtungen in Bezug auf die Hubplattform ausfahrbar ist. Eine zuverlässige Versorgung des am äußeren Schlitten vorgesehenen Sensors und/oder Aktuators mit elektrischer Energie und/oder Übertragung von Signalen zu dem Sensor und/oder Aktuator wird erreicht, indem die Energie und/oder Signale vorerst von den zwischen dem Tragrahmen und Zwischenschlitten angeordneten Sender- und/oder Empfangseinheiten auf die zwischen dem Zwischenschlitten und äußeren Schlitten angeordneten Sender- und/oder Empfangseinheiten übertragen und danach an einen Sensor und/oder Aktuator weitergeleitet wird.

Vorteilhaft sind auch die Fortbildungen nach den Ansprüchen 9 und 10, weil dadurch der mehrfach teleskopierbare Teleskopschubarm robust aufgebaut ist und dieser große Ausfahrweiten erreichen kann, sodass in Ausfahrrichtung des Teleskopschubarmes auch mehrere hintereinander ausgebildete Abstellplätze im Regallager anfahrbar sind und Ladehilfsmitteln ein- bzw. auslagert werden können.

Schließlich sind in den Ansprüchen 11 bis 14 vorteilhafte Ausbildungen für die Senderund/oder Empfangseinheiten beschrieben.

Die Erfindung wird im nachfolgenden anhand der in den Zeichnungen dargestellten Ausführungsbeispiele näher erläutert.

Es zeigen:

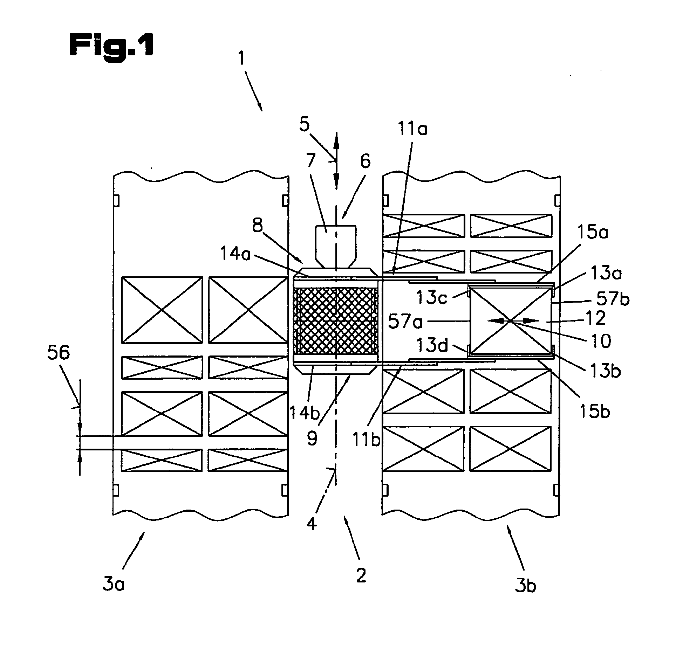

- Fig. 1: einen Ausschnitt aus einem Lagersystem mit zwei Regallagern und einem zwi- schen diesen verfahrbaren Förderfahrzeug, insbesondere Regalbediengerät, mit ei- ner Hubplattform und einem auf dieser angeordneten, erfindungsgemäßen Lastauf- nahmevorrichtung, in Draufsicht und schematischer Darstellung;

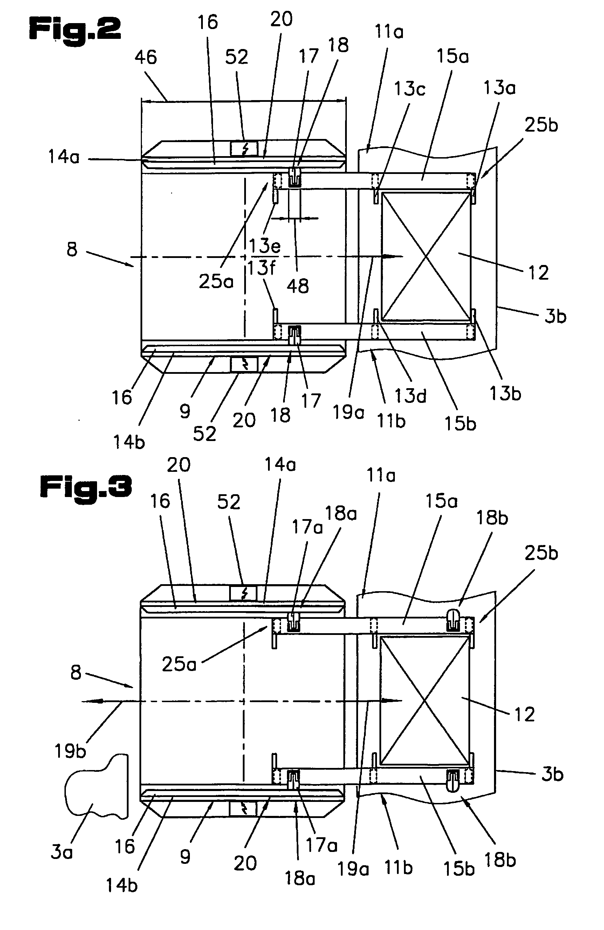

- Fig. 2: die erfindungsgemäße Lastaufnahmevorrichtung auf der Hubplattform zum Ein- bzw. Auslagern eines Ladehilfsmittels in ein bzw. aus einem Einzelregal, mit einer ersten Ausführung von nach eine Richtung ausfahrbaren, erfindungsgemäßen Tele- skopschubarmen, in Draufsicht und schematischer Darstellung;
- Fig. 3: die erfindungsgemäße Lastaufnahmevorrichtung auf der Hubplattform zum Ein- bzw. Auslagern eines Ladehilfsmittels in ein bzw. aus einem Einzelregal, mit einer ersten Ausführung von nach beide Richtungen ausfahrbaren, erfindungsgemäßen Teleskopschubarmen, in Draufsicht und schematischer Darstellung;

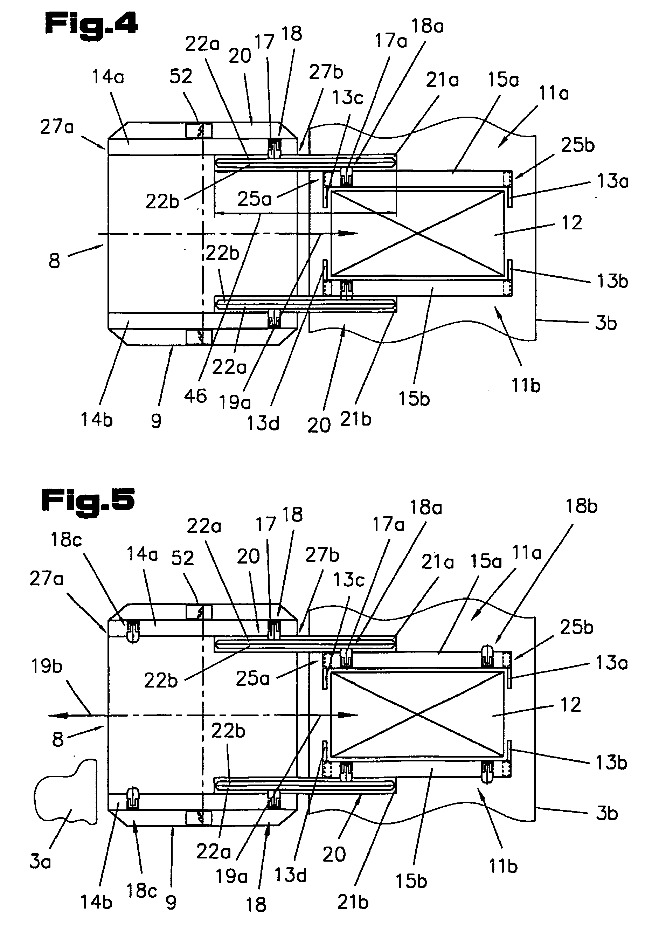

- Fig. 4: die erfindungsgemäße Lastaufnahmevorrichtung auf der Hubplattform zum Ein- bzw. Auslagern eines Ladehilfsmittels in ein bzw. aus einem Einzelregal, mit einer zweiten Ausführung von nach eine Richtung ausfahrbaren, erfindungsgemäßen Te- leskopschubarmen, in Draufsicht und schematischer Darstellung;
- Fig. 5: die erfindungsgemäße Lastaufnahmevorrichtung auf der Hubplattform zum Ein- bzw. Auslagern eines Ladehilfsmittels in ein bzw. aus einem Einzelregal, mit einer zweiten Ausführung von nach beide Richtungen ausfahrbaren, erfindungsgemäßen Teleskopschubarmen, in Draufsicht und schematischer Darstellung;

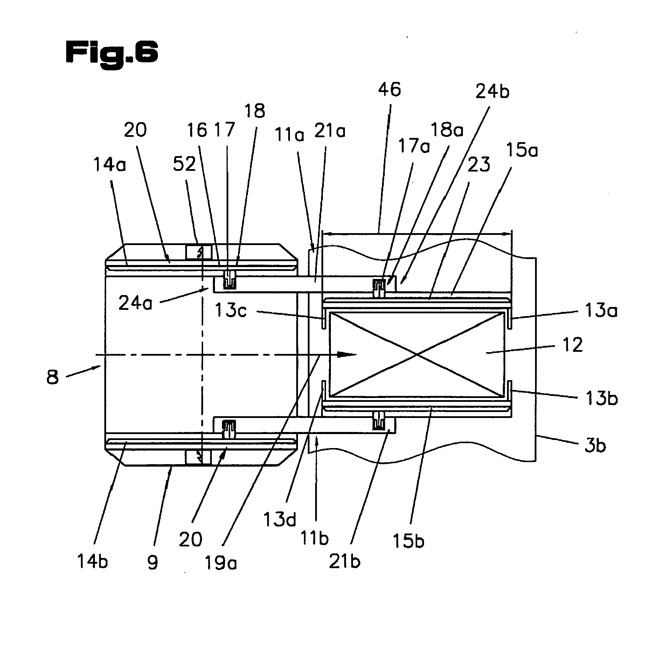

- Fig. 6: die erfindungsgemäße Lastaufnahmevorrichtung auf der Hubplattform zum Ein- bzw. Auslagern eines Ladehilfsmittels in ein bzw. aus einem Einzeiregal, mit einer dritten Ausführung von nach eine Richtung ausfahrbaren, erfindungsgemäßen Te- leskopschubarmen, in Draufsicht und schematischer Darstellung;

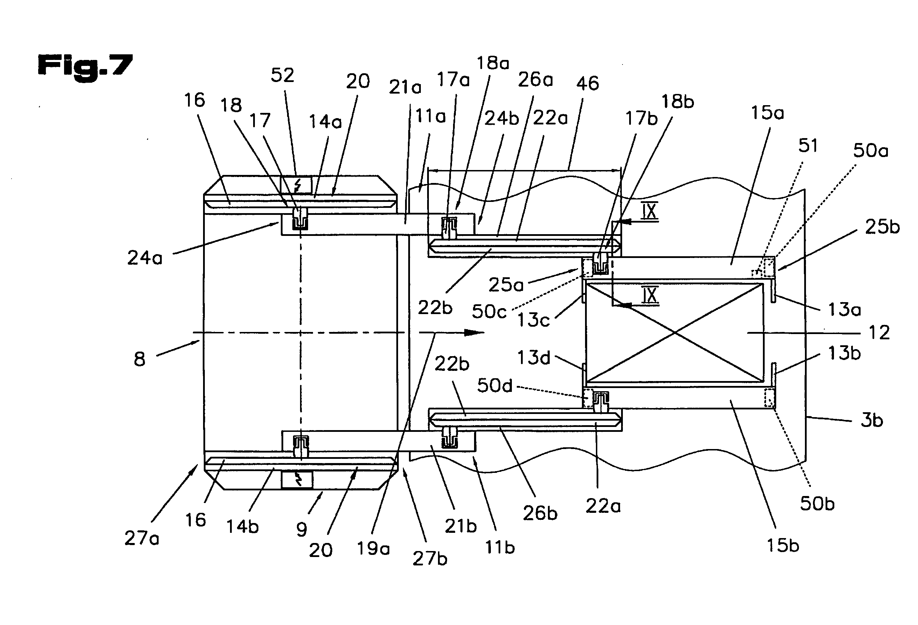

- Fig. 7: die erfindungsgemäße Lastaufnahmevorrichtung auf der Hubplattform zum Ein- bzw. Auslagern eines Ladehilfsmittels in ein bzw. aus einem Doppelregal, mit ei- ner vierten Ausführung von nach eine Richtung ausfahrbaren, erfindungsgemäßen Teleskopschubarmen, in Draufsicht und schematischer Darstellung;

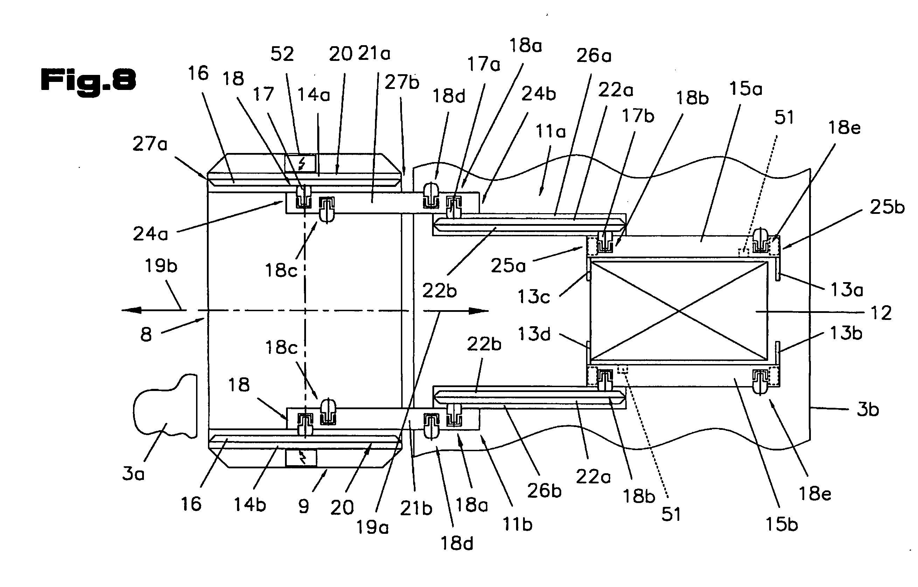

- Fig. 8: die erfindungsgemäße Lastaufnahmevorrichtung auf der Hubplattform zum Ein- bzw. Auslagern eines Ladehilfsmittels in ein bzw. aus einem Doppelregal, mit ei- ner dritten Ausführung von nach beide Richtungen ausfahrbaren, erfindungsgemä- ßen Teleskopschubarmen, in Draufsicht und schematischer Darstellung;

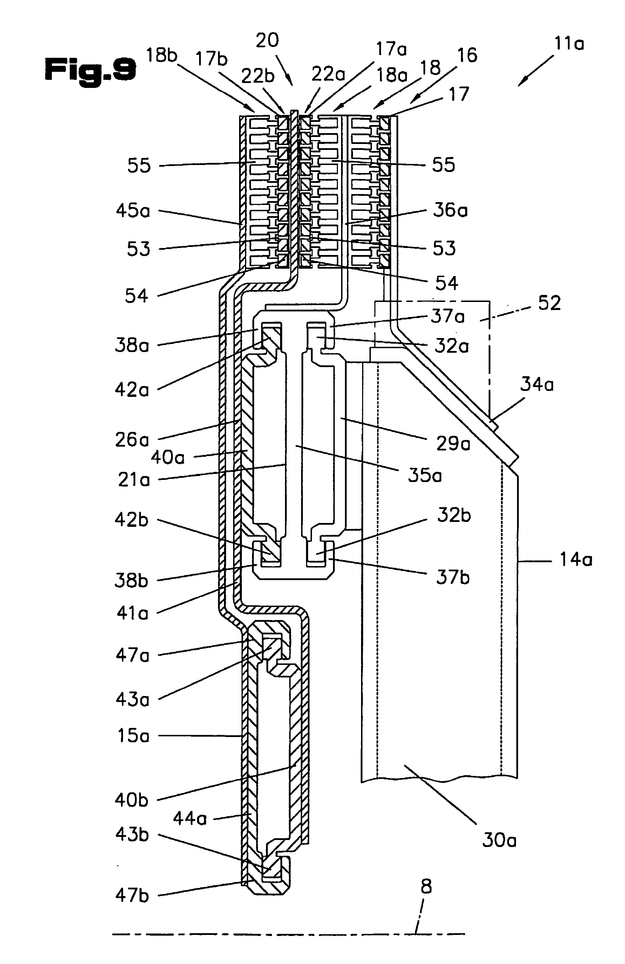

- Fig. 9: einen der Teleskopschubarme der Lastaufnahmevorrichtung mit einem Tragrah- men, ersten und zweiten Zwischenschlitten, einem äußeren Schlitten und einem Übertragungsmittel für Strom und/oder Signale mit Schleifleitungs- und Schleif- körperanordnungen, in Stirnansicht geschnitten gemäß den Linie IX-IX in Fig. 7 und vereinfachter Darstellung;

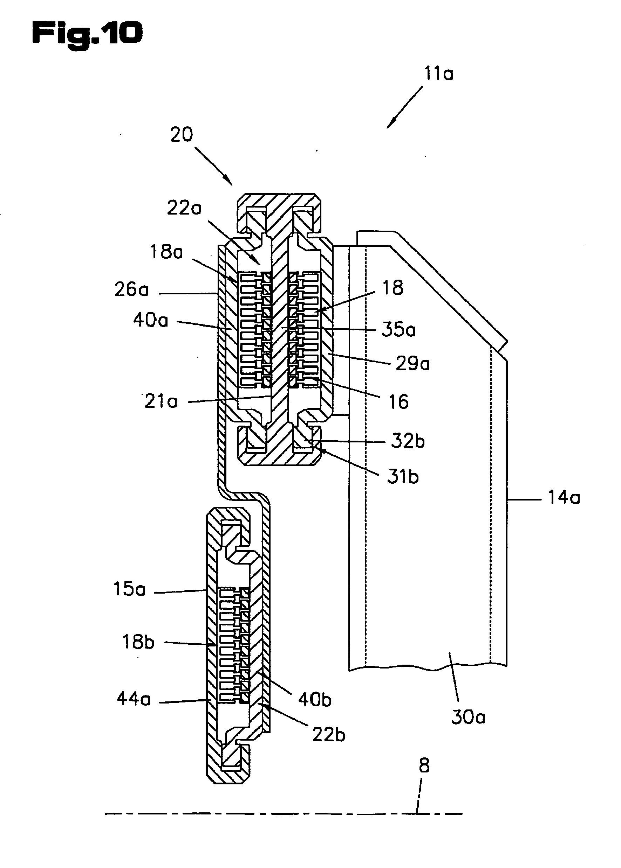

- Fig. 10: einen der Teleskopschubarme der Lastaufnahmevorrichtung mit einem Tragrah- men, ersten und zweiten Zwischenschlitten, einem äußeren Schlitten und einem Übertragungsmittel für Strom und/oder Signale mit einer anderen Anordnung der Schleifleitungs- und Schleifkörperanordnungen, in Stirnansicht, teilweise geschnit- ten und vereinfachter Darstellung;

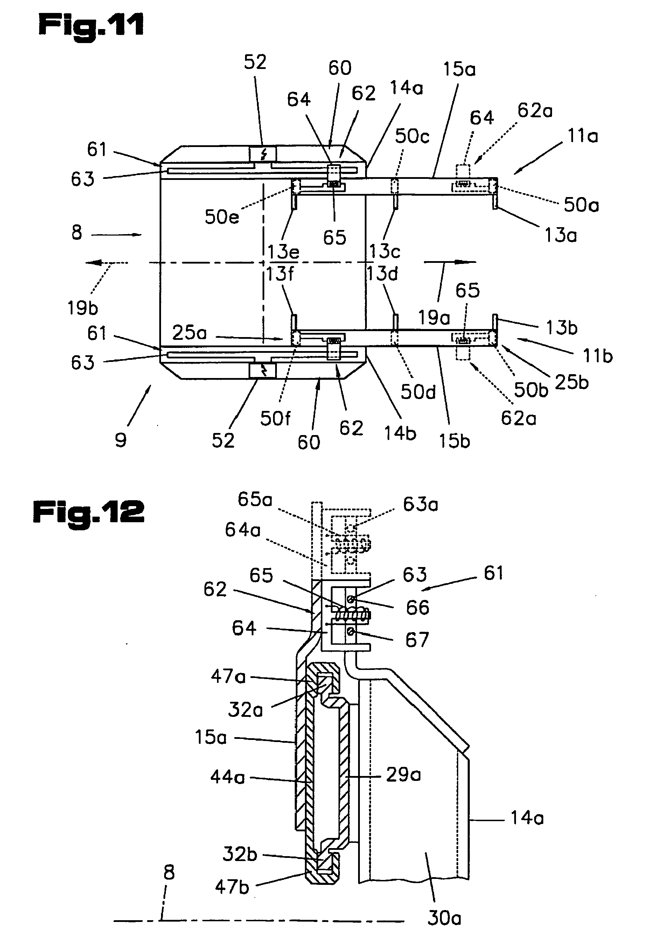

- Fig. 11: die erfindungsgemäße Lastaufnahmevonichtung auf der Hubplattform zum Ein- bzw. Auslagern eines Ladehilfsmittels in ein bzw. aus einem Einzeiregal, mit den Teleskopschubarmen mit einer anderen Ausführung der Übertragungsmitteln für elektrische Energie und/oder Signale, in Draufsicht und schematischer Darstellung;
- Fig. 12: einen Abschnitt des Teleskopschubarmes nach Fig. 11 mit einem Übertragungsmit- tel für elektrische Energie und/oder Signale, in Stimansicht geschnitten und sche- matischer Darstellung;

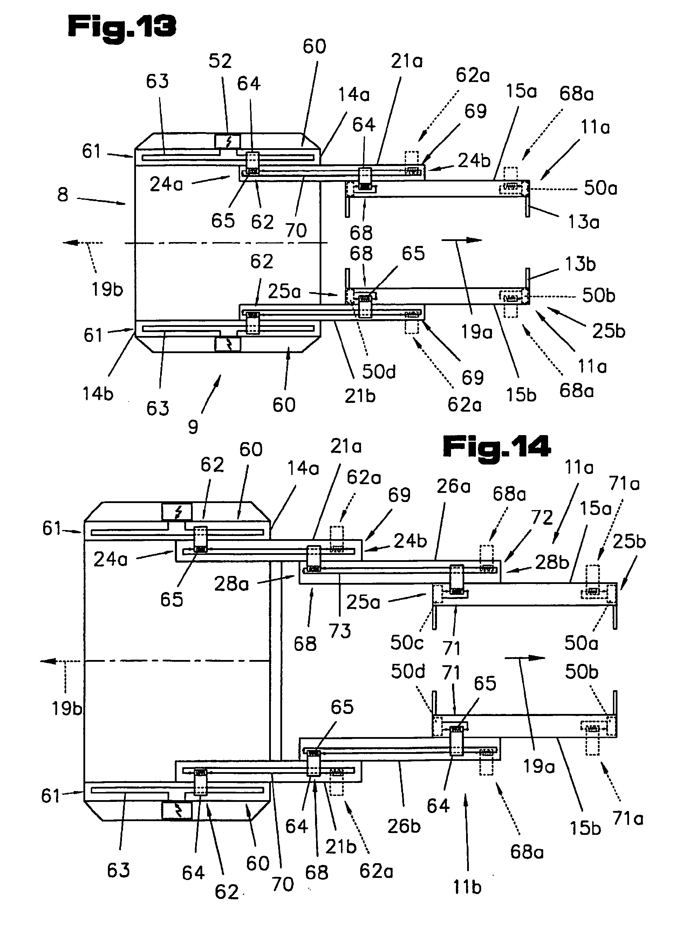

- Fig. 13: die erfindungsgemäße Lastaufnahmevorrichtung auf der Hubplattform zum Ein- bzw. Auslagern eines Ladehilfsmittels in ein bzw. aus einem Doppelregal, mit ei- ner anderen Ausführung der Teleskopschubarme mit den Übertragungsmitteln für elektrische Energie und/oder Signale, in Draufsicht und schematischer Darstellung;
- Fig. 14: die erfindungsgemäße Lastaufnahmevorrichtung auf der Hubplattform zum Ein- bzw. Auslagern eines Ladehilfsmittels in ein bzw. aus einem Doppelregal, mit ei- ner weiteren Ausführung der Teleskopschubarme mit den Übertragungsmitteln für elektrische Energie und/oder Signale, in Draufsicht und schematischer Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die Fig. 1 zeigt einen Ausschnitt eines vereinfacht dargestellten Lagersystems 1. Dieses umfasst beidseitig zu einer Gasse 2 angeordnete Regallager 3a, 3b und ein entlang der Gasse 2 bevorzugt auf einer Schiene 4 nach beide Richtungen - gemäß Doppelpfeil 5 - geführt verfahrbares, nicht näher dargestelltes Förderfahrzeug, insbesondere ein Regalbediengerät 6. Das Regalbediengerät 6 weist einen lotrechten Mast 7 auf, auf dem eine heb- und senkbare Hubplattform 8 geführt ist. Auf der Hubplattform 8 ist eine Lastaufnahmevorrichtung 9 zum Ein- bzw. Auslagern eines Ladehilfsmittels 12 in ein bzw. aus einem Regallager 3a, 3b angeordnet. Die Lastaufnahmevorrichtung 9 umfasst zwei zueinander parallel verlaufende und im Abstand voneinander angeordnete Teleskopschubarme 11a, 11b, die gemäß dem Doppelpfeil 10 in quer zur Gasse 2 verlaufender Ein- und Ausfahrrichtung synchron und gleichsinnig verstellbar sind. Die Teleskopschubarme 11a, 11b weisen nach dieser gezeigten Ausführung und wie in den Fig. 7 und 8 näher dargestellt, jeweils einen Tragrahmen 14a, b, einen ersten und zweiten Zwischenschlitten sowie einen dem zu transportierenden Ladehilfsmittel 12 benachbarten, äußeren Schlitten 15a, 15b auf. Die Zwischenschlitten sind relativ zum Tragrahmen 14a, 14b und der Schlitten 15a, b und die Zwischenschlitten relativ zueinander verstellbar.

Wie in Fig. 1 eingetragen, sind die äußeren Schlitten 15a, 15b jeweils mit zwei in Ein- und Ausfahrrichtung im Abstand angeordneten, quer zur Längsrichtung der Teleskopschubarme 11a, 11b verstellbaren, insbesondere verschwenkbaren, und beispielsweise getrennt ansteuerbaren Mitnehmerelementen 13a, 13b, 13c, 13d versehen, wobei der Abstand größer ist als eine in Ausfahrrichtung des Teleskopschubarmes 11a, 11b betrachtet zwischen einer vorderen und hinteren Seitenwand gemessene Abmessung des Ladehilfsmittels 12.

Beim Einlagern eines Ladehilfsmittels 12 von der Hubplattform 8 in das Regallager 3a, 3b wird das in Ausfahrrichtung betrachtet, hintere Paar von Mitnehmerelementen 13c, 13d aus einer Ruhestellung in eine den Außenumfang der Teleskopschubarme 11a, 11b überragende Arbeitsstellung verstellt. In der Arbeitsstellung der Mitnehmerelemente 13c, 13d wird die in Ausfahrrichtung betrachtet, vordere Seitenwand 57a des am gassennahen oder gassenfernen Abstellplatz im Regallager 3a, 3b abzustellenden Ladehilfsmittels 12 formschlüssig hintergriffen. Danach wird alleinig auf Grund der Ausfahrbewegung der Teleskopschubarme 11a, 11b das Ladehilfsmittel 12 von der Hubplattform 8 auf das Regallager 3a, 3b abgeschoben.

Beim Auslagern des Ladehilfsmittels 12 vom Regallager 3a, 3b auf die Hubplattform 8, verfahren die Teleskopschubarme 11a, 11b zu beiden Seiten neben dem auszulagernden Ladehilfsmittel 12 bis über eine hintere Seitenwand 57b dieses auszulagemden Ladehilfsmittels 12 hinaus, worauf das in Ausfahrrichtung betrachtet, vordere Paar von Mitnehmerelementen 13a, 13b aus einer Ruhestellung in eine den Außenumfang der Teleskopschubarme 11a, 11b überragende Arbeitsstellung verstellt wird. In der Arbeitsstellung der Mitnehmerelemente 13a, 13b wird die in Ausfahrrichtung betrachtet, hintere Seitenwand 57b des am gassennahen oder gassenfernen Abstellplatz im Regallager 3a, 3b abgestellten Ladehilfsmittels 12 formschlüssig hintergriffen. Danach wird alleinig auf Grund der Einfahrbewegung der Teleskopschubarme 11a, 11b das Ladehilfsmittel 12 vom Regallager 3a, 3b auf die Hubplattform 8 abgeschoben.

Die aus der Ruhestellung in die Arbeitsstellung verstellbaren Mitnehmerelemente 13a, 13b, 13c, 13d eines jeden Teleskopschubarmes 11a, 11b, sind an wenigstens einen, nicht gezeigten elektrischen Stellantrieb (Aktuator), insbesondere einen Elektromotor, gekuppelt Wie ebenfalls nicht dargestellt, werden die Ruhe- und Arbeitsstellung der Mitnehmerelemente 13a, 13b, 13c, 13d jeweils über einen Sensor überwacht. Der Stellantrieb und die Sensoren der Teleskopschubarme 11a, 11b sind am äußeren Schlitten 15a, 15b angeordnet. Natürlich können noch weitere, getrennt ansteuerbare Aktuatoren und/oder Sensoren für andere Funktionen am äußeren Schlitten 15a, 15b angeordnet werden.

Um den Aktuator und/oder die Sensoren mit elektrischer Energie und/oder Signalen zu versorgen, weist jeder Teleskopschubarm 11a, 11b ein Übertragungsmittel 20 auf, das in den nachfolgenden Figuren beschrieben wird.

Die Fig. 2 zeigt in sehr vereinfachter Darstellung eine Hubplattform 8, auf der die Lastaufnahmevorrichtung 9 angebracht ist, die aus zwei im Abstand parallel nebeneinander angeordneten Teleskopschubarme 11a, 11b besteht. Die einseitig ausfahrbaren Teleskopschubarme 11a, 11b weisen jeweils einen Tragrahmen 14a, 14b und einen an diesem in Längsrichtung auf einer Linearführung verschiebbar gelagerten Schlitten 15a, 15b auf. Die Tragrahmen 14a, 14b sind auf der Hubplattform 8 befestigt. Für die synchrone Ein- und Ausfahrbewegung der Schlitten 15a, 15b, wird auf diese synchron eine Antriebskraft übertragen. An jedem Schlitten 15a, 15b sind, wie bereits oben beschrieben, drei Mitnehmerelemente 13a, 13b, 13c, 13d, 13e,13f, Sensoren (nicht dargestellt) und in strichlierte Linien eingetragene Stellantriebe (Aktuatoren) angeordnet. Jedes Mitnehmerelemente 13a bis 13f ist mittels einem Stellantrieb um eine in Längsrichtung des Teleskopschubarmes 11a, 11b verlaufende Achse aus der Ruhestellung in die Arbeitstellung verschwenkbar. Die Mitnehmerelemente 13a bis 13f umgreifen in ihrer Arbeitsstellung ein Ladehilfsmittel 12 an einer vorderen oder hinteren Seitenwand formschlüssig.

Jeder Teleskopschubarm 11a, 11b umfasst ein Übertragungsmittel 20 zum Zuführen von elektrischer Energie und/oder zum Übertragen von Signalen von einer auf der Hubplattform 8 angeordneten Energie- und/oder Signal-Schnittstelle 52 zu den Aktuatoren und/oder Sensoren am Schlitten 15a,15b. Das mit der Schnittstelle 52 elektrisch leitend verbundene Übertragungsmittel 20 ist nach dieser Ausführung durch eine Schleifleitungsanordnung 16 und eine Schleiffkörperanordnung 18 gebildet, wobei zwischen der Schleifleitungsanordnung 16 und Schleifkörperanordnung 18 zumindest ein elektrischer Schleifkontakt 17 ausgebildet ist. Die Schleifleitungsanordnung 16 ist durch mehrere Schleifleitungen gebildet und am Tragrahmen 14a, 14b auf seiner dem Schlitten 15a, 15b zugewandten Seite befestigt. Eine Länge 46 der Schleifleitungsanordnung 16 entspricht annähernd der Länge des Tragrahmens 14a, 14b. Die Schleifkörperanordnung 18 ist durch mehrere Schleifkörper, insbesondere federbetätigte Schleifkohlen, gebildet und am Schlitten 15a, 15b im in Ausfahrrichtung - gemäß Pfeil 19a-eines Teleskopschubarmes 11a, 11b gegenüberliegenden, hinteren Endbereich 25a befestigt. Eine Länge 48 des Schleifkontaktes 17 der Schleifkörperanordnung 18 zwischen der Schleifleitungsanordnung 16 und der Schleifkörperanordnung 18 entspricht einem Bruchteil der Länge 46 der Schleifleitungsanordnung 16. Die Schleifleitungsanordnung 16 der Teleskopschubarme 11a, 11b ist jeweils an eine Schnittstelle 52 angeschlossen, die ihrerseits die Schleifleitungsanordnung 16 mit elektrischer Energie versorgt bzw. werden Signale von der Schnittstelle 52 an die Schleifleitungsanordnung 16 übertragen. Diese Schnittstelle 52 ist mit einer übergeordneten Steuerung, beispielsweise speicherprogammierbaren Steuerung (SPS), und/oder einer externen Energiequelle verbunden.

Eine andere nicht gezeigte Ausführung der einseitig ausfahrbaren Teleskopschubarme 11a, 11b, besteht in einer zur Fig. 2 alternativen Anordnung der Schleifleitungs- und Schleiflcörperanordnung 16, 18. Dazu ist die Schleifleitungsanordnung 16 am Schlitten 15a, 15b auf seiner dem Tragrahmen 14a, 14b zugewandten Seite befestigt und erstreckt sich im wesentlichen über die gesamte Länge des Schlittens 15a, 15b. Die Schleifkörperanordnung 18 dagegen, ist am Tragrahmen 14a,14b im in Ausfahrrichtung - gemäß Pfeil 19a - der Teleskopschubarme 11a, 11b vorderen Endbereich befestigt. Die Schleifkörperanordnung 18 der Teleskopschubarme 11a, 11b ist jeweils an eine Schnittstelle 52 angeschlossen, die ihrerseits die Schleifkörperanordnung 18 mit elektrischer Energie versorgt bzw. werden Signale von der Schnittstelle 52 an die Schleifkörperanordnung 18 übertragen.

Die Schleifleitungsanordnung 16 und Schleifkörperanordnung 18 sind gegenüber dem Tragrahmen 14a, 14b und Schlitten 15a, 15b elektrisch isoliert.

Die elektrische Energie für einen Sensor und/oder Aktuator am Schlitten 15a, 15b und die Signale für den Aktuator ist mittels der zwischen dem Tragrahmen 14a, 14b und Schlitten 15a, 15b vorgesehenen Schleifleitungsanordnung 16 zuführbar und mittels der zwischen dem Tragrahmen 14a, 14b und Schlitten 15a, 15b vorgesehenen Schleifkörperanordnung 18 abnehmbar.

Da nun die Schleifkörper der Schleifkörperanordnung 18 entlang der Schleifleitungen der Schleifleitungsanordnung 16 geführt sind bzw. gleiten und miteinander in elektrischer Verbindung stehen bzw. durch permanenten Andruck mindestens eines Schleifkörpers auf mindestens eine elektrisch leitfähige Schleifleitung (nicht dargestellt), kann während der Ausund Einfahrbewegung der Teleskopschubarme 11a, 11b die elektrische Energie und/oder Signale auf den Aktuator und/oder Sensor übertragen werden.

Die Ausführungsform der Lastaufnahmevorrichtung 9 nach Fig. 3 unterscheidet sich von jener nach Fig. 2 nur dadurch, dass die Teleskopschubarme 11a, 11b in Bezug auf die Hubplattform 8 nach beide Richtungen ausfahrbar sind und deren Schlitten 15a, 15b jeweils in beiden Endbereichen 25a, 25b mit einer Schleifkörperanordnung 18a, 18b versehen sind. Die Schleifkörperanordnungen 18a, 18b je Schlitten 15a, 15b sind baulich voneinander getrennt und gegebenenfalls elektrisch leitend miteinander verbunden, wie dies jedoch nicht dargestellt ist. Die Schleifleitungsanordnungen 16 sind jeweils wiederum an den Tragrahmen 14a, 14b befestigt. Mit dieser Ausführung können nun mittels der Lastaufnahmevorrichtung 9 zwei zu beiden Seiten des Regalbediengerätes 6 aufgestellte Regallager 3a, 3b bedient werden, daher Ladehilfsmittel 12 ein- bzw. ausgelagert werden. Werden die Schlitten 15a, 15b in Ausfahrrichtung - gemäß Pfeil 19a - nach rechts ausgefahren, sind die in Ausfahrrichtung - gemäß Pfeil 19a- betrachtet, im hinteren Endbereich 25a der Schlitten 15a angeordneten Schleifkörperanordnungen 18a über die Schleifkontakte 17a mit den Schleifleitungsanordnungen 16 elektrisch verbunden. Werden hingegen die Schlitten 15a, 15b in Ausfahrrichtung - gemäß Pfeil 19b - nach links ausgefahren, sind die in Ausfahrrichtung - gemäß Pfeil 19b - betrachtet, im hinteren Endbereich 25b der Schlitten 15a, 15b angeordneten Schleifkörperanordnungen 18b über die Schleifkontakte 17b (nicht eingetragen) mit den Schleifleitungsanordnungen 16 elektrisch verbunden. Somit ist unabhängig von der Ausfahrrichtung der Schlitten 15a, 15b der Teleskopschubarme 11a, 11b über die Schleifleitungs- und Schleifkörperanordnungen 16,18a oder 18b stets eine elektrische Verbindung zwischen der Schnittstelle 52 und den Sensoren und/oder Aktuatoren hergestellt und kann zu diesen Strom zugeführt und/oder Signale übertragen werden.

Eine andere nicht gezeigte Ausführung der in Bezug auf die Hubplattform 8 nach beide Richtungen ausfahrbaren Teleskopschubarme 11a, 11b, besteht in einer zur Fig. 3 alternativen Anordnung der Schleifleitungs- und Schleifkörperanordnungen 16,18a, 18b. Dazu ist die Schleifleitungsanordnung 16 am Schlitten 15a, 15b auf seiner dem Tragrahmen 14a, 14b zugewandten Seite befestigt und erstreckt sich im wesentlichen über die gesamte Länge des Schlittens 15a, 15b. Die baulich getrennten Schleikörperanordnungen 18 dagegen, sind am Tragrahmen 14a, 14b in seinen gegenüberliegenden, stirnseitigen Endbereichen befestigt. Die Schleifkörperonordnungen 18a, 18b des Teleskopschubarmes 11a, 11b sind an eine Schnittstelle 52 angeschlossen, die ihrerseits die Schleifkörperanordnungen 18a,18b mit elektrischer Energie versorgt bzw. werden Signale von der Schnittstelle 52 an die Schleifkörperanordnung 18a, 18b übertragen.

Die Fig. 4 zeigt in sehr vereinfachter Darstellung die Hubplattform 8, auf der die erfindungsgemäße Lastaufnahmevorrichtung 9 angebracht ist. Die Lastaufnahmevorrichtung 9 weist zwei parallel zueinander angeordnete, in Bezug auf die Hubplattform 8 einseitig ausfahrbare Teleskopschubarme 11a, 11b auf, die jeweils einen an der Hubplattform 8 befestigten Tragrahmen 14a, 14b, einen zu diesem relativ verstellbaren, äußeren Schlitten 15a, 15b sowie einen zwischen dem Tragrahmen 14a, 14b und Schlitten 15a,15b angeordneten Zwischenschlitten 21a, 21b umfassen. Der Schlitten 15a, 15b und Zwischenschlitten 21a, 21b sind relativ zueinander verstellbar und auf in Längsrichtung eines Teleskopschubarmes 11a, 11b verlaufenden Linearführungen, insbesondere Gleitführungen, linear verschiebbar geführt. Die äußeren Schlitten 15a,15b sind mit den oben beschriebenen, mittels den in strichlierte Linien eingetragenen Aktuatoren verstellbaren Mitnehmerelementen 13a, 13b, 13c, 13d ausgestattet, wobei beim Ein- bzw. Auslagervorgang ein Paar von Mitnehmerelementen 13a, 13b, 13c, 13d ein Ladehilfsmittel 12 an der in Ausfahrrichtung - gemäß Pfeil 19a - betrachtet, hinteren oder vorderen Seitenwand formschlüssig umgreifen ist.

Nach dieser Ausführung des Übertragungsmittels 20 je Teleskopschubarm 11a, 11b, weist der Zwischenschlitten 21a, 21b auf seinen dem Tragrahmen 14a, 14b und Schlitten 15a,15b zugewandten Seiten jeweils eine Schleifleitungsanordnung 22a, 22b auf. Der Tragrahmen 14a, 14b der Teleskopschubarme 11a, 11b ist in seinem in Ausfahrrichtung - gemäß Pfeil 19a - betrachtet, vorderen Endbereich 27b und der Schlitten 15a, 15b der Teleskopschubarme 11a, 11b ist in seinem in Ausfahrrichtung - gemäß Pfeil 19a - gegenüberliegenden, hinteren Endbereich 25a jeweils mit einer Schleifkörperanordnung 18,18a versehen, wobei zwischen einer Schleifleitungsanordnung 22a und 22b und einer Schleifkörperanordnung 18 und 18a jeweils wenigstens ein elektrischer Schleifkontakt 17 und 17a ausgebildet sind. Die auf dem Zwischenschlitten 21a, 21b befestigten Schleiffeitungsanordnungen 22a, 22b sind elektrisch leitend miteinander verbunden und weisen eine Länge 46 auf, die sich im wesentlichen über die gesamte Länge des Zwischenschlittens 21a, 21b erstreckt. Die Schleifleitungsanordnungen 22a, 22b können eine einstückig hergestellte Baueinheit bilden.

Die Schleifkörper- und Schleifleitungsanordnungen 18, 18a, 22a, 22b vom Übertragungsmittel 20, sind gegenüber dem Tragrahmen 14a, 14b, äußeren Schlitten 15a, 15b sowie Zwischenschlitten 21a, 21b elektrisch isoliert und bilden die elektrische Verbindung zwischen der Schnittstelle 52 und einem am äußeren Schlitten 15a, 15b angeordneten Sensor und/oder Aktuator aus. Die Schleifkörperanordnung 18 der Teleskopschubarme 11a, 11b sind an eine Schnittstelle 52 angeschlossen.

Der Strom und/oder ein elektrisches Signal, wird von der Schnittstelle 52 über die mittels Schleifkontakt 17, 17a elektrisch verbundenen Schleifkörper- und Schleifleitungsanordnungen 18,18a, 22a, 22b auf den am äußeren Schlitten 15a, 15b angeordneten Sensor und/oder Aktuator übergeleitet, unabhängig davon, ob die Teleskopschubarme 11a, 11b in eine Grundstellung auf der Hubplattform 8 eingefahren oder in eine Transportstellung in das Regallager 3a ausgefahren sind.

Die Ausführungsform nach der Fig. 5 unterscheidet sich von jener nach Fig. 4 nur dadurch, dass die Teleskopschubarme 11a, 11b in Bezug auf die Hubplattform 8 nach beide Richtungen ausfahrbar sind und der äußere Schlitten 15a, 15b als auch der Tragrahmen 14a, 14b eines jeden Teleskopschubarmes 11a, 11b jeweils in seinen gegenüberliegenden, stirnseitigen Endbereichen 25a, 25b, 27a, 27b mit je einer Schleiflcörperanordnung 18a, 18b, 18, 18c versehen sind. Jeder Zwischenschlitten 21a, 21b weist wiederum auf seinen dem Tragrahmen 14a, 14b und Schlitten 15a,15b zugewandten Seiten jeweils eine Schleifleitungsanordnung 22a, 22b auf. Die Schleifleitungsanordnung 22a und 22b und eine Schleifkörperanordnung 18 und 18a bilden jeweils einen elektrischen Schleifkontakt 17 und 17a aus. Die Schleifleitungsanordnungen 22a, 22b am Zwischenschlitten 21a, 21b sind elektrisch leitend miteinander verbunden. Durch diese Anordnung von Schleifkörper- und Schleifleitungsanordnungen 18, 18a, 18b, 18c, 22a, 22b ist unabhängig von der Ausfahrrichtung - gemäß Pfeil 19a oder 19b - der Teleskopschubarme 11a, 11b über eine der Schleiflcörperanordnungen 18 oder 18c je Tragrahmen 14a, 14b, die Schleifleitungsanordnungen 22a, 22b und eine der Schleiflcörperanordnungen 18a oder 18b je Schlitten 15a, 15b stets eine elektrische Verbindung zwischen der Schnittstelle 52 und einem Sensor und/oder Aktuator am Schlitten 15a, 15b hergestellt und können auf diese Strom und/oder Signale übertragen werden.

Eine andere nicht gezeigte Ausführung der beidseitig ausfahrbaren Teleskopschubarme 11a, 11b, besteht in einer zur Fig. 5 alternativen Anordnung der Schleifkörper- und Schleifleitungsanordnung 18 bis 18c, 22a, 22b. Dazu sind der Schlitten 15a, 15b und Tragrahmen 14a, 14b jeweils auf einander zugewandten Seiten mit je einer Schleifleitungsanordnung versehen. Der entsprechende Zwischenschlitten 21a, 21b dagegen, weist auf seinen dem Tragrahmen 14a, 14b und Schlitten 15a, 15b zugewandten Seiten jeweils in gegenüberliegenden stirnseitigen Endbereichen je eine Schleifkörperanordnung auf, wobei jeweils zwischen einer Schleifleitungsanordnung und einer Schleifkörperanordnung ein elektrischer Schleifkontakt ausgebildet ist. Für die Übertragung von Strom und/oder Signale, sind zumindest die am entsprechenden Zwischenschlitten 21a, 21b diagonal gegenüberliegenden Schleifkörperanordnungen elektrisch leitend miteinander verbunden.

Die Ausführungsform der Lastaufnahmevorrichtung 9 nach Fig. 6 zeigt eine Variante der Fig. 4. Dabei sind auf einander zugewandten Seiten des Schlittens 15a, 15b und Tragrahmens 14a, 14b eines Teleskopschubarmes 11a, 11b je eine Schleifleitungsanordnung 16, 23 befestigt. Der Zwischenschlitten 21a, 21b ist auf seiner dem Tragrahmen 14a, 14b zugewandten Seite im in Ausfahrrichtung - gemäß Pfeil 19a - gegenüberliegenden, hinteren Endbereich 24a und auf seiner dem Schlitten 15a, 15b zugewandten Seite im in Ausfahrrichtung - gemäß Pfeil 19a - vorderen Endbereich 24b mit je einer Schleifkörperanordnung 18, 18a versehen, wobei jeweils zwischen einer Schleifleitungsanordnung 16, 23 und einer Schleifkörperanordnung 18, 18a wenigstens ein elektrischer Schleifkontakt 17, 17a ausgebildet ist bzw. die Schleifleitungs- und Schleifkörperanordnungen 16, 23, 18,18a in elektrischer Verbindung stehen. Die Schleifkörperanordnungen 18, 18a am Zwischenschlitten 21a, 21b sind elektrisch leitend miteinander verbunden. Die Länge 46 der Schleifleitungsanordnungen 16, 23 entspricht im wesentlichen der Länge des Tragrahmens 14a, 14b und Schlittens 15a, 15b.

Die Fig. 7 zeigt in sehr vereinfachter Darstellung eine Hubplattform 8, auf der die erfindungsgemäße Lastaufinahmevorrichtung 9 angebracht ist. Die Lastaufnahmevorrichtung 9 weist zwei parallel zueinander angeordnete, in Bezug auf die Hubplattform 8 einseitig ausfahrbare Teleskopschubarme 11a, 11b auf, die jeweils einen Tragrahmen 14a, 14b, einen zu diesem relativ verstellbaren, äußeren Schlitten 15a, 15b, einen dem Tragrahmen 14a, 14b benachbarten, ersten Zwischenschlitten 21a, 21b und einen dem Schlitten 15a, 15b benachbarten, zweiten Zwischenschlitten 26a, 26b umfassen. Zusätzlich ist jeder Teleskopschubarm 11a, 11b mit einem Übertragungsmittel 20 zum Zuführen von elektrischer Energie und/oder zum Übertragen von Signalen von der Energie- und/oder Signal-Schnittstelle 52 zu den am Schlitten 15a, 15b befestigten Stellantrieben (Aktuatoren 50a bis 50d) für die Mitnehmerelemente 13a bis 13d und/oder einem Sensor 51 ausgestattet, welches durch die Schleifleitungsund Schleifkörperanordnungen 16, 22a, 22b, 18,18a,18b gebildet ist. Der Sensor 51 dient beispielsweise zum Erfassen eines Belegungszustandes im Regallager 3b und dgl.. Die Zwischenschlitten 21a, 21b, 26a, 26b sind relativ zum Tragrahmen 14a, 14b und der Schlitten 15a, b und die Zwischenschlitten 21a, 21b, 26a, 26b relativ zueinander verstellbar. Der erste und zweite Zwischenschlitten 21a, 21b, 26a, 26b als auch der äußere Schlitten 15a, 15b jedes Teleskopschubarmes 11a, 11b sind auf in Längsrichtung des Teleskopschubarmes 11a, 11b verlaufenden Linearführungen verschiebbar geführt.

Der Tragrahmen 14a, 14b ist auf seiner dem Schlitten 15a, 15b zugewandten Seite mit der Schleifleitungsanordnung 16 und der dem Schlitten 15a, 15b benachbarte, zweite Zwischenschlitten 26a, 26b auf seinen dem Tragrahmen 14a, 14b und Schlitten 15a, 15b zugewandten Seiten mit jeweils einer Schleifleitungsanordnung 22a, 22b versehen. Der dem Tragrahmen 14a, 14b benachbarte, erste Zwischenschlitten 21a, 21b ist auf seiner dem Tragrahmen 14a, 14b zugewandten Seite im in Ausfahrrichtung - gemäß Pfeil 19a - gegenüberliegenden, hinteren Endbereich 24a und auf seiner dem Schlitten 15a, 15b zugewandten Seite im in Ausfahrrichtung - gemäß Pfeil 19a- betrachtet, vorderen Endbereich 24b mit je einer Schleifkörperanordnung 18, 18a versehen. Der äußere Schlitten 15a, 15b weist im in Ausfahrrichtung - gemäß Pfeil 19a - gegenüberliegenden, hinteren Endbereich 25a eine Schleifkörperanordnung 18b auf. Die Schleifkörperanordnungen 18, 18a am ersten Zwischenschlitten 21a, 21b als auch die Schleifleitungsanordnungen 22a, 22b am zweiten Zwischenschlitten 26a, 26b sind jeweils untereinander elektrisch leitend miteinander verbunden. Zwischen den Schleifleitungsanordnungen 16, 22a, 22b und den betreffenden Schleifkörperanordnungen 18, 18a,18b sind elektrische Schleifkontakte 17, 17a, 17b ausgebildet bzw. stehen die Schleifkörper- und Schleifleitungsanordnungen 18, 18a, 18b, 16, 22a, 22b mittels den Schleifkontakten 17,17a, 17b in elektrischer Verbindung.

Eine andere nicht gezeigte Ausführung der einseitig ausfahrbaren Teleskopschubarme 11a, 11b, besteht in einer zur Fig. 7 alternativen Anordnung der Schleifkörper- und Schleifleitungsanordnung 18, 18a, 18b, 16, 22a, 22b. Dazu weist der Schlitten 15a, 15b auf seiner dem Tragrahmen 14a, 14b zugewandten Seite eine Schleifleitungsanordnung und der dem Tragrahmen 14a, 14b benachbarte, erste Zwischenschlitten 21a, 21b auf seinen dem Tragrahmen 14a, 14b und Schlitten 15a, 15b zugewandten Seiten jeweils eine Schleifleitungsanordnung auf. Der Tragrahmen 14a, 14b dagegen, ist im in Ausfahrrichtung - gemäß Pfeil 19a - betrachtet, vorderen Endbereich 27b mit einer Schleifkörperanordnung und der dem Schlitten 15a, 15b benachbarte, zweite Zwischenschlitten 26a, 26b auf seiner dem Tragrahmen 14a, 14b zugewandten Seite im in Ausfahrrichtung - gemäß Pfeil 19a - gegenüberliegenden, hinteren Endbereich und auf seiner dem Schlitten 15a, 15b zugewandten Seite im in Ausfahrrichtung - gemäß Pfeil 19a - betrachtet, vorderen Endbereich mit je einer Schleifkörperanordnung versehen, wobei zwischen einer Schleifleitungsanordnung und einer betreffenden Schleifkörperanordnung ein elektrischer Schleifkontakt ausgebildet ist. Die Schleifleitungsanordnungen am ersten Zwischenschlitten 21a, 21b als auch die Schleifkörperanordnungen am zweiten Zwischenschlitten 26a, 26b sind jeweils untereinander elektrisch leitend miteinander verbunden.

Die Ausführungsform nach der Fig. 8 unterscheidet sich von jener nach Fig. 7 nur dadurch, dass die Teleskopschubarme 11a, 11b in Bezug auf die Hubplattform 8 nach beide Richtungen ausfahrbar sind und der dem Tragrahmen 14a, 14b benachbarte, erste Zwischenschlitten 21a, 21b auf seinen dem Tragrahmen 14a, 14b und Schlitten 15a, 15b zugewandten Seiten jeweils in gegenüberliegenden, stirnseitigen Endbereichen 24a, 24b mit je einer Schleifkörperanordnung 18,18a, 18c, 18d sowie der Schlitten 15a, 15b jeweils in gegenüberliegenden, stirnseitigen Endbereichen 25a, 25b mit je einer Schleifkörperanordnung 18b, 18e versehen sind.

Wie in dieser Fig. eingetragen, ist zwischen einer Schleifleitungsanordnung 16, 22a, 22b und einer Schleitkörperanordnung 18,18a, 18b jeweils ein elektrischer Schleifkontakt 17, 17a, 17b ausgebildet, wenn die Teleskopschubarme 11a, 11b nach rechts - gemäß Pfeil 19a - in das Regallager 3b ausgefahren werden. Werden die Teleskopschubarme 11a, 11b, wie nicht weiters dargestellt, nach links - gemäß Pfeil 19b - in das Regallager 3a ausgefahren, ist zwischen einer Schleifleitungsanordnung 16, 22a, 22b und einer Schleifkörperanordnung 18c, 18d, 18e jeweils ein elektrischer Schleifkontakt 17c, 17d, 17e ausgebildet.

Eine andere nicht gezeigte Ausführung der beidseitig ausfahrbaren Teleskopschubarme 11a, 11b, besteht in einer zur Fig. 8 alternativen Anordnung der Schleifleitungs- und Schleifkörperanordnung 16, 22a, 22b, 18 bis 18e. Dazu weist der Schlitten 15a, 15b auf seiner dem Tragrahmen 14a, 14b zugewandten Seite eine Schleifleitungsanordnung und der dem Tragrahmen 14a, 14b benachbarte, erste Zwischenschlitten 21a, 21b auf seinen dem Tragrahmen 14a, 14b und Schlitten 15a, 15b zugewandten Seiten jeweils eine Schleifleitungsanordnung auf. Der Tragrahmen 14a, 14b dagegen, ist in gegenüberliegenden, stirnseitigen Endbereichen 27a, 27b jeweils mit einer Schleifkörperanordnung und der dem Schlitten 15a, 15b benachbarte, zweite Zwischenschlitten 26a, 26b auf seinen dem Tragrahmen 14a, 14b und Schlitten 15a, 15b zugewandten Seiten jeweils in gegenüberliegenden, stirnseitigen Endbereichen mit je einer Schleifkörperanordnung versehen, wobei jeweils zwischen einer Schleifleitungsanordnung und einer Schleifkörperanordnung ein elektrischer Schleifkontakt ausgebildet ist. Die Schleifleitungsanordnungen am ersten Zwischenschlitten 21a, 21b als auch die Schleifkörperanordnungen am zweiten Zwischenschlitten 26a, 26b sind jeweils untereinander elektrisch leitend miteinander verbunden.

Fig. 9 zeigt eine bevorzugte Ausführung eines auf der durch strichpunktierte Linien nur schematisch angedeuteten Hubplattform 8 angeordneten Teleskopschubarmes 11a, 11b der Lastaufnahmevorrichtung 9, in Stirnansicht geschnitten. Der Teleskopschubarm 11a weist, wie oben beschrieben, den Tragrahmen 14a, den ersten und zweiten Zwischenschlitten 21a, 26a und den äußeren Schlitten 15a auf. Der Tragrahmen 14a umfasst einen etwa C-förmigen Führungsteil 29a, einen Rahmenteil 30a und eine an diesem befestigte Halterung 34a. Der Rahmenteil 30a ist seinerseits auf der Hubplattform 8 befestigt. Der Führungsteil 29a besitzt eine Linearführung, sodass auf dem Tragrahmen 14a der in Längsrichtung auf der Linearführung verschiebbare, erste Zwischenschlitten 21a geführt ist. Die zur Ein- und Ausfahrrichtung des Teleskopschubarmes 11a parallel verlaufende Linearführung umfasst, wie in dieser Fig. ersichtlich, zwei voneinander getrennte Höhen- und/oder Seitenfilhrungsbahnen 32a, 32b, die beispielsweise als Gleitführung ausgeführt sind. An der profilartigen Halterung 34a vom Tragrahmen 14a ist auf einer dem ersten Zwischenschlitten 21a zugewandten Seite, die Schleifleitungsanordnung 16 angeordnet, die parallel zur Ein- und Ausfahrrichtung des Teleskopschubarmes 11a verläuft.

Der am Tragrahmen 14a verschiebbar geführte, im Querschnitt etwa I-förmige, erste Zwischenschlitten 21a, umfasst einen Führungsteil 35a und eine an diesem befestigte, etwa L-förmige Halterung 36a. Der Führungsteil 35a besitzt zwei voneinander getrennte Linearführungen, eine für die Führung des ersten Zwischenschlittens 21a am Tragrahmen 14a und die andere für die Führung des zweiten Zwischenschlittens 26a am ersten Zwischenschlittens 21a. Der zweite Zwischenschlitten 26a ist somit in Längsrichtung auf einer der Linearführungen verschiebbar am ersten Zwischenschlitten 21a geführt. Die zur Ein- und Ausfahrrichtung des Teleskopschubarmes 11a parallel verlaufenden Linearführungen umfassen, wie in dieser Fig. ersichtlich, jeweils zwei voneinander getrennte Höhen- und/oder Seitenführungsbahnen 37a, 37b, 38a, 38b, die beispielsweise als Gleitführung ausgeführt sind. An der profilartigen Halterung 36a, insbesondere am aufragenden Schenkel, vom ersten Zwischenschlitten 21a ist auf einer der Halterung 34a vom Tragrahmen 14a zugewandten Seite, die Schleifkörperanordnung 18 und auf einer der Halterung 34a vom Tragrahmen 14a abgewandten Seite, die Schleifkörperanordnung 18a befestigt. Die Schleifkörperanordnungen 18, 18a verlaufen parallel zur Ein- und Ausfahrrichtung des Teleskopschubarmes 11a.

Der zweite Zwischenschlitten 26a umfasst zwei übereinander angeordnete und voneinander abgewandte, etwa C-förmige. Führungsteile 40a, 40b und eine am oberen Führungsteil 40a befestigte, etwa L-förmige Halterung 41a. Die Führungsteile 40a, 40b besitzen jeweils zwei voneinander getrennte Linearführungen, eine für die Führung des zweiten Zwischenschlittens 26a am ersten Zwischenschlittens 21a und die andere für die Führung des äußeren Schlittens 15a am zweiten Zwischenschlittens 26a. Der äußeren Schlittens 15a ist somit in Längsrichtung auf einer der Linearführungen verschiebbar am zweiten Zwischenschlitten 26a geführt. Die parallel zur Ein- und Ausfahrrichtung des Teleskopschubarmes 11a verlaufenden Linearführungen umfassen, wie in dieser Fig. ersichtlich, zwei voneinander getrennte Höhen- und/ oder Seitenführungsbahnen 42a, 42b, 43a, 43b, die beispielsweise als Gleitführung ausgeführt sind. An der profilartigen Halterung 41a, insbesondere am aufragenden Schenkel, vom zweiten Zwischenschlitten 26a, ist auf einer der Halterung 34a vom Tragrahmen 14a zugewandten Seite, die Schleifleitungsanordnung 22a und auf einer der Halterung 34a vom Tragrahmen 14a abgewandten Seite, die Schleifleitungsanordnung 22b befestigt. Die Schleifleitungsanordnungen 22a, 22b verlaufen parallel zur Ein- und Ausfahrrichtung des Teleskopschubarmes 11a.

Der äußere Schlitten 15a umfasst einen Führungsteil 44a und eine an diesem befestigte, im wesentlichen ebene, profilartige Halterung 45a. Der Führungsteil 43a besitzt eine Linearführung für die Führung des Schlittens 15a am zweiten Zwischenschlitten 26a. Der Schlitten 15a ist somit in Längsrichtung mittels der Linearführung verschiebbar am zweiten Zwischenschlitten 26a geführt. Die parallel zur Ein- und Ausfahrrichtung des Teleskopschubarmes 11a verlaufende Linearführung umfasst, wie in dieser Fig. ersichtlich, jeweils zwei voneinander getrennte Höhen- und/oder Seitenführungsbahnen 47a, 47b, die beispielsweise als Gleitführung ausgeführt sind. An der Halterung 45a vom ersten Zwischenschlitten 21a, ist auf einer der Halterung 34a vom Tragrahmen 14a zugewandten Seite, die Schleifkörperanordnung 18b befestigt. Diese Schleifkörperanordnung 18b verläuft parallel zur Ein- und Ausfahrrichtung des Teleskopschubarmes 11a.

Die Schleifleitungsanordnungen 16, 22a, 22b und Schleifkörperanordnungen 18, 18a, 18b bilden das beschriebene Übertragungsmittel 20, wobei nach dieser Ausführung zwischen der betreffenden Schleifleitungsanordnung 16, 22a, 22b und Schleifkörperanordnung 18 eine Vielzahl von elektrischen Schleifkontakte 17,17a, 17b, beispielsweise zehn, ausgebildet sind.

Die Schleifleitungsanordnungen 16, 22a, 22b; 23 bestehen aus einem Isolierstoffgrundkörper 53, vorzugsweise Kunststoff, und mindestens einer elektrisch leitenden Schleifleitung 54 in Form einer Metallschiene und dgl.. Die Schleifkörperanordnungen 18, 18a, 18b; 18c bis 18e bestehen aus mindestens einem elektrisch leitfähigen Schleifkörper 55 in Form einer federbetätigten Schleifkohle und dgl.. Zweckmäßig sind mehrere parallel nebeneinander liegende Schleifleitungen 54 für Motorströme, Steuerströme und Datenübertragungssignale ausgebildet, entlang welcher mehrere Schleifkörper 55 über den gesamten Ein- und Ausfahrweg des Teleskopschubarmes 11a, 11b gleiten. Ein Schleifkontakt 17, 17a, 17b wird dadurch hergestellt, dass ein Schleifkörper 55 gegen eine Schleifleitung 54 angepresst wird. Beispielsweise sind zehn Schleifleitungen 54 je Schleifleitungsanordnung 16, 22a, 22b; 23 und zehn Schleifkörper 55 je Schleifkörperanordnung 18, 18a, 18b; 18c bis 18e vorgesehen.

Wie nicht weiters dargestellt, sind die Schleifkörperanordnungen 18 und 18a sowie die Schleifleitungsanordnungen 22a und 22b elektrisch leitend miteinander verbunden, wobei die Schleifleitungsanordnung 16 die Schleifkörperanordnung 18, die Schleifkörperanordnung 18a die Schleifleitungsanordnung 22a, die Schleifleitungsanordnung 22a die Schleifleitungsanordnung 22b und die Schleifleitungsanordnung 22b die Scbleifkörperanordnung 18b mit elektrischer Energie versorgt und/oder auf diese die Signale überträgt. Die Schleifkörperanordnung 18b ist wiederum mit den in Fig. 7 eingetragenen Aktuatoren 50a bis 50d und/oder dem Sensor 51 verbunden. Die Schleifleitungsanordnung 16, ist mit der schematisch dargestellten Schnittstelle 52 verbunden, wie durch die Verbindungslinie schematisch angedeutet.

Wie schon die Fig. 9 erkennen lässt, ist der Teleskopschubarm 11a, 11b sehr kompakt aufgebaut und kann deshalb der zwischen zwei im Regallager 3a, 3b, wie in Fig. 1 dargestellt, nebeneinander abgestellten Ladehilfsmitteln 12 benötigte Spaltabstand 56 schmal ausgelegt werden.

Zusätzlich ist von Vorteil, dass die Schleifleitungs- und Schleifkörperanordnungen 16, 22a, 22b; 23,18 bis 18b; 18c bis 18d des Übertragungsmittels 20 auf der von der Hubplattform 8 abgewandten Seite oberhalb oder auf der von der Hubplattform 8 zugewandten Seite unterhalb des Teleskopschubarmes 11a, 11b, insbesondere Zwischenschlitten 21a, 21b und/oder Zwischenschlitten 26a, 26b und/oder Schlitten 15a, 15b, angeordnet sind, sodass eine sehr schmal gehaltene Breite der Teleskopschubarme 11a, 11b beibehalten werden kann und durch die Anordnung des Übertragungsmittels 20 die Teleskopschubarme 11a, 11b nicht verbreitert werden müssen. Dies ist insofern möglich, als dass die Übertragungsmittel 20 der Teleskopschubarme 11a, 11b an den ohnehin seitlich neben dem durch die Raumhöhe des zu transportierenden Ladehilfsmittels 12 vorgegebenen Freiräumen platziert werden können, entweder oberhalb oder unterhalb des betreffenden Teleskopschubarmes 11a, 11b.

Eine andere Anordnung der Schleifleitungsanordnungen 16, 22a, 22b und Schleifkörperanordnungen 18, 18a, 18b des Übertragungsmittels 20 ist in Fig. 10 gezeigt. Wie ersichtlich, ist die zumindest eine Schleifkörperanordnung 18 auf der dem ersten Zwischenschlitten 21a zugewandten Seite am C-förmigen Führungsteil 29a des Tragrahmens 14a befestigt. Die Schleifleitungsanordnung 16 ist auf der dem Tragrahmen 14a zugewandten Seite am Führungsteil 35a des ersten Zwischenschlittens 21a befestigt.

Die Schleifleitungsanordnung 22a ist auf der dem zweiten Zwischenschlitten 26a zugewandten Seite am Führungsteil 35a des ersten Zwischenschlittens 21a befestigt. Die Schleifkörperanordnung 18a ist auf der dem Tragrahmen 14a zugewandten Seite am C-förmigen Führungsteil 40a des zweiten Zwischenschlittens 26a befestigt. Am weiteren, C-förmigen Führungsteil 40b des zweiten Zwischenschlittens 26a ist auf der dem äußeren Schlitten 15a, 15b zugewandten Seite, die Schleifleitungsanordnung 22b befestigt.

Die Schleifkörperanordnung 18b ist auf der dem Tragrahmen 14a zugewandten Seite am Führungsteil 44a des Schlittens 15a befestigt.

Die Schleifleitungsanordnungen 16, 22a sind elektrisch miteinander verbunden. Ebenso sind die Schleifkörperanordnung 18a und Schleifleitungsanordnung 22b elektrisch miteinander verbunden. Die Schleifkörperanordnung 18 ist an der nicht dargestellten Schnittstelle 52 angeschlossen.

Die Ausführung nach Fig. 10 ist von Vorteil, da das Übertragungsmittel 20 weitestgehend geschützt vor äußeren Schmutzeinwirkungen bleibt und deshalb eine hohe Funktionssicherheit des Teleskopschubarmes 11a, 11b erreicht wird.

Es sei an dieser Stelle hingewiesen, dass die Schleifkörper 55 als federbetätigte Schleifkohlen und dgl. ausgebildet sind. Durch beiderseitige Einlaufschrägen an den Schleifleitungen und den angeschrägten, federnd gelagerten Schleifkörpern 55 der Schleifkörperanordnungen 18; 18a bis 18e, wird ein sicheres und stoßarmes Aus- und Einfahren der Schleifkörperanordnungen 18; 18a bis 18e aus und in die Schleifleitungsanordnungen 16, 22a, 22b; 23 ermöglicht. Die Schleifleitungsanordnungen 16, 22a, 22b; 23 sind nach einer Seite offen und stehen mit den Schleifkörperanordnungen 18; 18a bis 18e, insbesondere den Schleifkörpern 55, in elektrischen Kontakt. Sie bestehen jeweils aus mindestens einer elektrisch leitenden Schleifleitung 54, die auf die gleiche Länge des jeweiligen Zwischenschlittens 21a, 21b; 26a, 26b und Schlittens 15a, 15b oder Tragrahmens 14a, 14b abgestimmt und elektrisch isoliert ist.

In einer weiteren Ausgestaltung sind die Schleifkörperanordnungen 18; 18a bis 18e um ihre Symmetrieachse jeweils mit linken und rechten Schleifkörpern 55 doppelt ausgeführt, womit eine sichere Kontaktierung zwischen Schleifleitung 54 und Schleifkörper 55 und Energieübertragung erreicht wird, selbst wenn einer der Schleifkörper 55 durch reibungsbedingte Abnutzung verschlissen ist.

Die oben beschriebene Schleifleitungsanordnung 16, 22a, 22b; 23 bildet ein Stromzuführelement und die Schleifkörperanordnung 18; 18a bis 18e einen Stromabnehmer aus.

Der Antrieb der Zwischenschlitten 21a, 21b; 26a, 26b und des äußeren Schlittens 15a, 15b eines Teleskopschubarmes 11a, 11b erfolgt beispielsweise mittels nicht gezeigten Zugmitteltrieben, insbesondere Riementrieben, wobei auf einen der Zwischenschlitten 21a, 21b, 26a, 26b eine Antriebskraft eingeleitet und mittels den Zugmitteltrieben auf den weiteren Zwischenschlitten 21a, 21b; 26a, 26b und äußeren Schlitten 15a, 15b übertragen wird. Ein mögliches Antriebskonzept für die Ausführung nach Fig. 5 ist aus der US 2003/0185656 A1 bekannt und wird die diesbezügliche, detaillierte Offenbarung zum Gegenstand dieser Offenbarung gemacht. Dabei sind der Tragrahmen 14a, 14b und äußere Schlitten 15a, 15b über zwei Riemen miteinander gekoppelt. Die Riemen sind jeweils um, in dem in Ausfahrrichtung - gemäß Pfeil 19a, 19b - des Teleskopschubarmes 11a, 11b vorderen Endbereich des Zwischerischlittens 21a, 21b gelagerte Rollen umgelenkt sowie mit ihren ersten freien Enden am Tragrahmen 14a, 14b und ihren zweiten freien Enden am äußeren Schlitten 15a, 15b befestigt. Der Zwischenschlitten 21a, 21b ist angetrieben.

In den gemeinsam beschriebenen Fig. 11 bis 14 ist die erfindungsgemäße Lastaufnahmevorrichtung 9 gezeigt. Diese Lastaufnahmevorrichtung 9 weist wiederum die parallel zueinander im Abstand angeordneten Teleskopschubarme 11a, 11b auf, die über diese aufweisende Tragrahmen 14a, 14b auf der Hubplattform 8 befestigt sind.

Die Teleskopschubarme 11a, 11b nach Fig. 11, weisen jeweils den Tragrahmen 14a,14b und Schlitten 15a, 15b sowie ein zwischen diesen angeordnetes Übertragungsmittel 60 zum Zufuhren von elektrischer Energie und/oder zum Übertragen von Signalen von der auf der Hubplattform 8 angeordneten Energie- und/oder Signal-Schnittstelle 52 zu den am äußeren Schlitten 15a, 15b angeordneten Aktuatoren 50a bis 50f und/oder Sensoren (nicht weiters darstellt) auf. Die Aktuatoren 50a bis 50f sind durch Elektromotoren gebildet und ist jeweils ein Elektromotor an ein, um eine in Längsrichtung des Schlittens 15a, 15b verlaufende Achse verschwenkbares Mitnehmerelement 13a bis 13f gekoppelt.

Das Übertragungsmittel 60 ist nach dieser Ausführung durch Sender- und/oder Empfangseinheiten 61, 62 gebildet, zwischen denen zur Energie- und/oder Signalübertragung ein elektromagnetisches Feld erzeugt wird. Die erste Sender- und/oder Empfangseinheit 61 ist am Tragrahmen 14a, 14b und die zweite Sender- und/oder Empfangseinheit 62 am äußeren Schlitten 15a, 15b angeordnet. Sind die Teleskopschubarme 11a, 11b zum Ausfahren in nur eine Richtung vorgesehen, so ist die zweite Sender- und/oder Empfangseinheit 62 in dem in Ausfahrrichtung - gemäß Pfeil 19a - gegenüberliegenden, hinteren Endbereich 25a angeordnet.

Die erste Sender- und/oder Empfangseinheit 61 ist durch eine großflächige Spule, insbesondere eine Leiterschleife 63 gebildet, die sich im wesentlichen über die gesamte Länge des Trägerrahmens 14a, 14b erstreckt und mit der Schnittstelle 52 verbunden ist, die ihrerseits die Leiterschleife 63 aus einer externen Energiequelle mit Energie und/oder externen Steuereinheit mit Signalen versorgt. Die zweite Sender- und/oder Empfangseinheit 62 ist durch einen gabelartigen, offenen ferromagnetischen Kern 64 und eine auf ihm angeordnete Spule 65 gebildet. Die Wicklungen der Spule 65 sind vorzugsweise am mittleren Zinken vom Kern 64 aufgebracht. Der Kern 64 der Sender- und/oder Empfangseinheit 62, ist am Schlitten 15a, 15b derart befestigt, dass dieser eine Hin- und Rückleitung 66, 67 der Leiterschleife 63 umschließt. Die Leiterschleife 63 und Spule 65 sind in geringem Abstand benachbart zueinander angeordnet und liegen einander gegenüber, sodass die Übertragungsstrecke bzw. der Luftspalt möglichst kurz ist, womit auch die möglichen Verluste minimiert werden.

Wird in die Leiterschleife 63 Wechselspannung eingespeist und diese vom Wechselstrom durchflossen, wird in Folge des sich abhängig von der Frequenz der in die Leiterschleife 63 eingespeisten Wechselspannung in Größe und Richtung ändernden, magnetischen Flusses, in die Spule 64 der Sender- und/oder Empfangseinheit 62 Strom bzw. Spannung induziert. Die Leiterschleife 63 und Spule 65 sind elektrisch voneinander isoliert, jedoch magnetisch miteinander gekoppelt. Daher durchsetzt das von der stromdurchflossenen Leiterschleife 63 erzeugte Magnetfeld die Spule 65.

Soll eine leitungslose Übertragung von elektrischen Signalen und elektrischer Energie gleichzeitig erfolgen, ist in einer ersten Ausführung, wie in der Fig. 12 in strichlierten Linien eingetragen, der Tragrahmen 14a, 14b zusätzlich mit einer, die erste Sender- und/oder Empfangseinheit 61 aufweisenden, zweiten Leiterschleife 63a und der Schlitten 15a, 15b zusätzlich mit einer die zweite Sender- und/oder Empfangseinheit 62 aufweisenden, zweiten Spule 65a versehen. Dazu können die Spulen 65, 65a der zweiten Sender- und/oder Empfangseinheit 62 jeweils auf einem eigenen am Schlitten 15a, 15b befestigten, ferromagnetischen Kern 64, 64a, wie in Fig. 12 in strichlierten Linien gezeigt, angeordnet werden. In diesem Fall entfällt eine notwendige Filterung zwischen Energie und Signale.

In einer nicht gezeigten, zweiten Ausführung weist die erste Sender- und/oder Empfangseinheit 61 zwei Leiterschleife 63, 63a und die zweite Sender- und/oder Empfangseinheit 61 zwei Spulen 65, 65a auf, wobei die Spulen 65, 65a auf nur einem ferromagnetischen Kern 64 angeordnet sind.

In einer dritten Ausführung zur gleichzeitigen Übertragung von Signalen und elektrischer Energie, weist die erste Sender- und/oder Empfangseinheit 61 nur eine Leiterschleife 63 und die zweite Sender- und/oder Empfangseinheit 61 nur eine Spule 65 auf. Bei der Übertragung eines Wechselstromes mit der Leiterschleife 63, bildet sich ein magnetisches Wechselfeld aus, das in der Spule 65 einen frequenzgleichen Wechselstrom hervorruft. Dem magnetischen Wechselfeld wird ein hochfrequentes Signal überlagert. Die Signale werden somit auf das durch die Energieübertragung hervorgerufene magnetische Wechselfeld aufmoduliert. Dem zu Folge liegt die in die Spule 65 induzierte Spannung in unterschiedlicher Höhe und Frequenz vor. Durch einen entsprechenden Filter können die aufmodulierten Signale dem elektromagnetischen Feld wieder entnommen werden, sodass auch die Signale und Energie wieder separat abgreifbar sind. Nach der Filterung liegen die die Signale und Energie wieder in der Form vor, wie sie von der Leiterschleife 63 ursprünglich ausgesandt wurden. In dieser Form können sie dann von einer Logik verarbeitet werden. Die von der Leiterschleife 63 bzw. 63a in die Spule 65 bzw. 65a der Sender- und/oder Empfangseinheit 62 induzierte Wechselspannung kann beispielsweise gleichgerichtet und in die geforderte Spannung umgewandelt werden. Dazu ist ein Stromkreis vorgesehen, der aus der Spule 65 bzw. 65a, einem Kondensator, der parallel zu der auf dem ferromagnetischen Kern 64 bzw. 64a aufgebrachten Spule 65 bzw. 65a geschaltet ist, und einer Diode besteht. Diode und Kondensator stellen eine Gleichrichterdiode mit nachgeschalteter Pufferkapazität dar, um die zur Energieversorgung empfangene Wechselspannung wieder gleichzurichten.

Die Übertragung der Energie und/oder Signale zwischen den Sender- und/oder Empfangseinheiten 61, 62 kann sowohl im Voll- als auch im Halbduplexverfahren erfolgen.

Sind im Gegensatz zu der oben beschriebenen Ausführung, die Teleskopschubamze 11a, 11b nach beide Richtungen in Bezug auf die Hubplattform 8 ausfahrbar, ist der Schlitten 11a, 11b der Teleskopschubarme 11a, 11b zusätzlich auch im weiteren Endbereich 25b mit einer Sender- und/oder Empfangseinheit 62a ausgestattet, wie in strichlierte Linien dargestellt. Werden die Teleskopschubarme 11a, 11b in Ausfahrrichtung - gemäß Pfeil 19a - nach rechts ausgefahren, wird nur in die Spule(n) 65 bzw. 65a der im Endbereich 25a angeordneten, zweiten Sender- und/oder Empfangseinheit 62 Wechselspannung induziert. Werden dagegen die Teleskopschubarme 11a, 11b gemäß der in strichlierte Linien eingetragenen Ausfahrrichtung-Pfeil 19b - nach links ausgefahren, wird nur in die Spule(n) 65 bzw. 65a der im Endbereich 25b angeordneten, zweiten Sender- und/oder Empfangseinheit 62a Wechselspannung induziert. Die Sender- und/oder Empfangseinheit 62a entspricht in ihrem Aufbau der Senderunti/oder Empfangseinheit 62.

Wie in den Fig. eingetragen, ist die Spule(n) 65 bzw. 65a der Sender- und/oder Empfangseinheit 62, 62a über Verbindungsleitungen und gegebenenfalls unter Zwischenschaltung des Kondensators und der Gleichrichterdiode mit den Aktuatoren 50a bis 50f und Sensoren (nicht dargestellt) elektrisch leitend verbunden.

In Fig. 13 ist eine andere Ausführung der Teleskopschubarme 11a, 11b für die Lastaufnahmevorrichtung 9 gezeigt. Die Teleskopschubarme 11a, 11b weisen jeweils einen Tragrahmen 14a, 14b, einen äußeren Schlitten 15a, 15b und einen zwischen diesen angeordneten Zwischenschlitten 21a, 21b auf, wie bereits oben ausführlich beschrieben ist. Zusätzlich ist jeder Teleskopschubarm 11a,11b mit dem Übertragungsmittel 60 zum Zuführen von elektrischer Energie und/oder zum Übertragen von Signalen zu den Aktuatoren 50a bis 50d und/oder Sensoren (nicht dargestellt) ausgestattet, das die Sender- und/oder Empfangseinheiten 61, 62, (62a), 68, 69 umfasst. Der Tragrahmen 14a, 14b der Teleskopschubarme 11a, 11b ist wiederum mit der ersten Sender- und/oder Empfangseinheit 61 versehen, die durch die an der Schnittstelle 52 angeschlossene Leiterschleife 63 gebildet ist.

Sind die Teleskopschubarme 11a, 11b nur zum einseitigen Ausfahren geeignet, ist der Zwischenschlitten 21a, 21b im in Ausfahrrichtung - gemäß Pfeil 19a - gegenüberliegenden, hinteren Endbereich 24a mit der zweiten Sender- und/oder Empfangseinheit 62 und der Schlitten 15a im in Ausfahrrichtung - gemäß Pfeil 19a - gegenüberliegenden, hinteren Endbereich 25a mit einer vierten Sender- und/oder Empfangseinheit 68 versehen. Der Zwischenschlitten 21a, 21b ist zusätzlich mit einer dritten Sender- und/oder Empfangseinheit 69 versehen. Die zweite und vierte Sender- und/oder Empfangseinheit 62, 68 sind jeweils durch eine auf einem ferromagnetischen Kern 64 aufgebrachten Spule 65 gebildet. Der Kern 64 der zweiten Sender- und/oder Empfangseinheit 62 ist am Zwischenschlitten 21a und der Kern 64 der vierten Sender- und/oder Empfangseinheit 68 ist am äußeren Schlitten 15a befestigt. Die dritte Sender- und/oder Empfangseinheit 69 ist durch eine Leiterschleife 70 gebildet, die an die Spule 65 der zweiten Sender- und/oder Empfangseinheit 62 angeschlossen ist.

Die Sender- und/oder Empfangseinheiten 61, 62, 68, 69 sind wiederum in der Art und Weise aufgebaut, dass eine leitungslose Übertragung von Signalen und elektrischer Energie gleichzeitig erfolgen kann.

Können die Teleskopschubanne 11a, 11b nach beide Richtungen in Bezug auf die Hubplattform 8 ausfahren, ist der Zwischenschlitten 21a, 21b und Schlitten 11a, 11b zusätzlich am gegenüberliegenden Endbereich 24b, 25b mit einer Sender- und/oder Empfangseinheit 62a, 68a ausgestattet, wie in strichlierten Linien dargestellt. Werden die Teleskopschubarme 11a, 11b gemäß der eingetragenen Ausfahrrichtung 19a nach rechts ausgefahren, wird nur in die Spulen 65 (65a) der im Endbereich 24a, 25a angeordneten, zweiten und vierten Sender- und/ oder Empfangseinheiten 62, 68 Wechselspannung induziert. Werden dagegen die Teleskopschubarme 11a, 11b gemäß der in strichlierte Linien eingetragenen Ausfahrrichtung 19b nach links ausgefahren, wird nur in die Spulen 65 (65a) der im Endbereich 24b, 25b angeordneten zweiten und vierten Sender- und/oder Empfangseinheiten 62a, 68a Wechselspannung induziert. Die Sender- und/oder Empfangseinheiten 62a, 68a entsprechen in ihrem Aufbau der Sender- und/oder Empfangseinheit 62.

Die Spule(n) 65 (65a) der vierten Sender- und/oder Empfangseinheiten 68, 68a sind jeweils an die Aktuatoren 50a bis 50d und/oder Sensoren (nicht dargestellt) angeschlossen.

Die Leiterschleife 63 und Spule 65 der ersten Sender- und/oder Empfangseinheit 62, (62a) sind elektrisch voneinander isoliert, jedoch magnetisch miteinander gekoppelt, daher das Magnetfeld, das die stromdurchflossene Leiterschleife 63 erzeugt, durchsetzt die Spule 65. Ebenso sind die Leiterschleife 70 und Spule 65 der vierten Sender- und/oder Empfangseinheit 68, (68a) elektrisch voneinander isoliert, jedoch magnetisch miteinander gekoppelt, daher das Magnetfeld, das die stromdurchflossene Leiterschleife 70 erzeugt, durchsetzt die Spule 65.

Fig. 14 zeigt eine weitere Ausführung der Teleskopschubarme 11a, 11b für die Lastaufnahmevorrichtung 9. Diese weisen jeweils einen auf der Hubplattform 8 befestigten Tragrahmen 14a, 14b, einen äußeren Schlitten 15a, 15b sowie zwischen diesen angeordnete Zwischenschlitten 21a, 21b, 26a, 26b auf, wie bereits oben ausführlich beschrieben. Zusätzlich ist jeder Teleskopschubarm 11a, 11b mit dem Übertragungsmittel 60 zum Zuführen von elektrischer Energie und/oder zum Übertragen von Signalen zu den Aktuatoren 50a bis 50d und/oder Sensoren (nicht dargestellt) ausgestattet, das die Sender- und/oder Empfangseinheiten 61, 62, (62a), 68, (68a), 69, 71, (71a) umfasst. Die Tragrahmen 14a, 14b sind mit der ersten Senderund/oder Empfangseinheit 61 ausgestattet, die durch die an der Schnittstelle 52 angeschlossene Leiterschleife 63 gebildet ist.

Sofern die Teleskopschubarme 11a, 11b nur einseitig ausgefahren werden können, sind der dem Tragrahmen 14a benachbarte, erste Schlitten 21a, 21b in seinem in Ausfahrrichtung - gemäß Pfeil 19a - gegenüberliegenden, hinteren Endbereich 24a mit der zweiten Senderund/oder Empfangseinheit 62, der dem Schlitten 15a benachbarte, zweite Zwischenschlitten 26a, 26b in seinem in Ausfahrrichtung - gemäß Pfeil 19a - gegenüberliegenden, hinteren Endbereich 28a mit der vierten Sender- und/oder Empfangseinheit 68 und der Schlitten 15a, 15b in seinem in Ausfahrrichtung - gemäß Pfeil 19a - gegenüberliegenden, hinteren Endbereich 25a mit einer sechsten Sender- und/oder Empfangseinheit 71 versehen.

Der erste Zwischenschlitten 21a, 21b ist zusätzlich mit einer dritten Sender- und/oder Empfangseinheit 69 und der zweite Zwischenschlitten 26a, 26b zusätzlich mit einer fünften Sender- und/oder Empfangseinheit 72 ausgestattet. Die erste, dritte und fünfte Sender- und/oder Empfangseinheiten 61, 69, 72 sind durch Leiterschleifen 63, 70 und 73 gebildet. Diese Leiterschleifen 63, 70, 73 erstrecken sich jeweils im wesentlichen über die gesamte Länge des Tragrahmens 14a, 14b, ersten und zweiten Zwischenschlittens 21a, 21b, 26a, 26b. Die Leiterschleife 70 ist wiederum an die Spule 65 der zweiten Sender- und/oder Empfangseinheit 62 und die Leiterschleife 73 an die Spule 65 der vierten Sender- und/oder Empfangseinheit 68 angeschlossen.

Der Kern 64 (64a) mit der auf ihm aufgebrachten Spule 65 (65a) der zweiten Sender- und/ oder Empfangseinheit 62 (62a), ist am ersten Zwischenschlitten 21a, 21b befestigt. Der Kern 64 (64a) mit der auf ihm aufgebrachten Spule 65 (65a) der vierten Sender- und/oder Empfangseinheit 68, ist am zweiten Zwischenschlitten 26a, 26b befestigt. Der Kern 64 (64a) mit der auf ihm aufgebrachten Spule 65 (65a) der sechsten Sender- und/oder Empfangseinheit 71 ist am Schlitten 15a,15b befestigt.

Sind die Teleskopschubarme 11a, 11b dazu geeignet, nach beide Richtungen in Bezug auf die Hubplattform 8 ausfahren zu können, sind die Zwischenschlitten 21a, 21b, 26a, 26b als auch der äußere Schlitten 15a, 15b zusätzlich auch im weiteren Endbereich 24b, 28b, 25b mit je einer Sender- und/oder Empfangseinheit 62a, 68a, 71a ausgestattet, wie in strichlierten Linien dargestellt. Werden die Teleskopschubarme 11a, 11b, gemäß der eingetragenen Ausfahrrichtung - gemäß Pfeil 19a - nach rechts ausgefahren, wird nur in die Spulen 65 (65a) der im Endbereich 24a, 28a, 25a angeordneten, zweiten, vierten und sechsten Sender- und/oder Empfangseinheit 62, 68, 71 Wechselspannung induziert, während bei umgekehrter Ausfahrrichtung - gemäß Pfeil 19b - wie in strichlierten Linien eingetragen, nur in die Spulen 65 (65a) der im Endbereich 24b, 28b, 25b angeordneten, zweiten, vierten und sechsten Senderund/oder Empfangseinheit 62a, 68a, 71a Wechselspannung induziert wird.

Erfolgt die Übertragung der Energie und/oder Signale auf getrenntem Wege, wie zu Fig. 12 beschrieben, so weisen die Sender- und/oder Empfangseinheiten 61, 69, 72 jeweils zwei getrennte Leiterschleifen 63, 63a, 70, 70a, 73, 73a und die Sender- und/oder Empfangseinheiten 62, 68, 71 jeweils zwei Spulen 65, 65a auf, die auf einem oder zwei Kernen 64, 64a angeordnet ist bzw. sind.

Die Spule(n) 65 (65a) der sechsten Sender- und/oder Empfangseinheiten 71, 71a sind jeweils an die Aktuatoren 50a bis 50d und/oder Sensoren (nicht dargestellt) angeschlossen.

Ebenso sind die Leiterschleife 73 und Spule 65 der sechsten Sender- und/oder Empfangseinheit 71, (71a) elektrisch voneinander isoliert, jedoch magnetisch miteinander gekoppelt, daher das Magnetfeld, das die stromdurchflossene Leiterschleife 73 erzeugt, durchsetzt die Spule 65.

Im Gegensatz zur bisher beschriebenen Energie- und/oder Signal- bzw. Datenübertragung mittels im wesentlichen induktiver Elemente, kann die Energie- und/oder Signal- bzw. Datenübertragung gleichfalls auch mit im wesentlichen kapazitiven Elementen, z. B. Kondensatoren, erfolgen. Anstelle der Windungen einer Spule 65, (65a), die auf einem ferromagnetischem Kern 64 (64a) aufgebracht ist, weist der Tragrahmen 14a, 14b, die Zwischenschlitten 21a, 21b, 26a, 26 und Schlitten 15, 15b dann als Sender- und/oder Empfangseinheit z. B. eine erste Platte eines Plattenkondensators auf. Die korrespondierende Sender- und/oder Empfangseinheit am benachbarten Zwischenschlitten 21a, 21b, 26a, 26 oder Schlitten 15, 15b ist die entsprechende, zweite Platte des Plattenkondensators. Bei Anlegen einer Spannung an den so gebildeten Kondensator bildet sich zwischen den Kondensatorplatten ein elektrisches Feld aus, das ganz analog wie das zuvor beschriebene elektromagnetische Feld zur Energieund/oder Signal- bzw. Datenübertragung verwendet werden kann.

Ebenso ist eine leitungslose Energie- und/oder Signal- bzw. Datenübertragung zwischen den in oben beschriebener Weise an den Tragrahmen 14a, 14b, Zwischenschlitten 21a, 21b, 26a, 26 und Schlitten 15, 15b befestigten Sender- und/oder Empfangseinheiten auch auf optischem Wege, beispielsweise mittels Laser oder Infrarot, und/oder mittels Funk möglich.

Abschließend sei noch darauf hingewiesen, dass die Übertragung der Energie und/oder Signale nicht nur von der Schnittstelle 52 zu den Aktuatoren 50a bis 50e und/oder Sensoren erfolgen kann, sondern auch von den Aktuatoren 50a bis 50e und/oder Sensoren zur Schnittstelle 52. Es ist somit eine bidirektionale Übertragung der Energie und/oder Signale möglich. Ebenso können die wechselweise angeordneten Sender- und/oder Empfangseinheiten 61, 62 (62a); 68 (68a), 69; 71 (71a), 72 zwischen dem Tragrahmen 14a, 14b, Zwischenschlitten 21a, 21b; 26a, 26b und Schlitten 15a, 15b auch in umgekehrter Reihenfolge angeordnet werden. So kann der Tragrahmen 14a, 14b für den Fall, dass der Schlitten 15a, 15b nur in eine Richtung ausfahren kann, in einem seiner Endbereiche 27a, 27b oder für den Fall, dass der Schlitten 15a, 15b in beide Richtungen ausfahren kann, in beiden Endbereiche die Sender- und/oder Empfangseinheit 62 (62a) aufweisen, während der Schlitten 15, 15b mit der Sender- und/oder Empfangseinheit 61 (61a) ausgestattet ist.

Die Austührungsbeispiele zeigen mögliche Ausführungsvarianten der Anwendung eines Teleskopschubarmes 11a, 11b, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvananten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvananten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus des Teleskopschubarmes 11a, 11b dieser bzw. dessen Bestandteile teilweise unmaßstäblich und/oder vergrößert und/oder verkleinert dargestellt wurden.

### Bezugszeichenaufstellung

| | | | |
|---|---|---|---|
| 1 | Lagersystem | 24a | Endbereich Zwischenschlitten |
| 2 | Gasse | 24b | Endbereich Zwischenschlitten |
| 3a | Regallager | 25a | Endbereich Schlitten |
| 3b | Regallager | 25b | Endbereich Schlitten |
| 4 | Schiene | 26a | Zwischenschlitten |
| 5 | Doppelpfeil | 26b | Zwischenschlitten |
| 6 | Regalbediengerät | 27a | Endbereich Tragrahmen |
| 7 | Mast | 27b | Endbereich Tragrahmen |
| 8 | Hubplattform | 28a | Endbereich Zwischenschlitten |
| 9 | Lastaufnahmevorrichtung | 28b | Endbereich Zwischenschlitten |
| 10 | Doppelpfeil | 29a | Führungsteil |
| | | | |
| 11a | Teleskopschubarm | 30a | Rahmenteil |
| 11b | Teleskopschubarm | 32a | Höhen-und/oder Seitenfüuhrungsbahn |
| 12 | Ladehilfsmittel | 32b | Höhen- und/oder Seitenführungsbahn |
| 13a | Mitnehmerelement | 34a | Halterung |
| 13b | Mitnehmerelement | 35 | Führungsteil |
| 13c | Mitnehmerelement | 36a | Halterung |
| 13d | Mitnehmerelement | 37a | Höhen- und/oder Seitenführungsbahn |
| 13e | Mitnehmerelement | 37b | Höhen- und/oder Seitenführungsbahn |
| 13f | Mitnehmerelement | 38a | Höhen- und/oder Seitenführungsbahn |
| 14a | Tragrahmen | 38b | Höhen- und/oder Seitenführungsbahn |
| 14b | Tragrahmen | 40a | Führungsteil |
| 15a | Schlitten | 40b | Führungsteil |
| 15b | Schlitten | | |
| | | | |
| 16 | Schleifleitungsanordnung | 41a | Halterung |
| 17 | Schleifkontakt | 42a | Höhen- und/oder Seitenführungsbahn |
| 17a | Schleifkontakt | 42b | Höhen- und/oder Seitenführungsbahn |
| 17b | Schleifkontakt | 43a | Höhen-und/oder Seitenführungsbahn |
| 18 | Schleifkörperanordnung | 43b | Höhen- und/oder Seitenführungsbahn |
| 18a | Schleifkörperanordnung | 44a | Führungsteil |
| 18b | Schleiflcörperanordnung | 45a | Halterung |
| 18c | Schleifkörperanordnung | 46 | Länge Schleifleitungsanordnung |
| 18d | Schleifkörperanordnung | 48 | Länge Schleifkontakt |
| 18e | Schleifkörperanordnung | 50a | Aktuator |
| 19a | Ausfahrrichtung | 50b | Aktuator |
| 19b | Ausfahrrichtung | 50c | Aktuator |
| 20 | Übertragungsmittel | 50d | Aktuator |
| | | | |
| 21a | Zwischenschlitten | 51 | Sensor |
| 21b | Zwischenschlitten | 52 | Schnittstelle |
| 22a | Schleifleitungsanordnung | 53 | Isoliergrundstoffkörper |
| 22b | Schleifleitungsanordnung | 54 | Schleifleitung |
| 23 | Schleifleitungsanordnung | 55 | Schleifkörper |
| 56 | Spaltabstand | | |
| 57a | Seitenwand | | |
| 57b | Seitenwand | | |
| 60 | Übertragungsmittel | | |
| 61 | Sender- und/oder Empfangseinheit | | |
| 62 | Sender- und/oder Empfangseinheit | | |
| 62a | Sender- und/oder Empfangseinheit | | |
| 63 | Leiterschleife | | |
| 63a | Leiterschleife | | |
| 64 | Kern | | |
| 64a | Kern | | |
| 65 | Spule | | |
| 65a | Spule | | |
| | | | |
| 66 | Hinleitung | | |
| 67 | Rückleitung | | |
| 68 | Sender- und/oder Empfangseinheit | | |
| 68a | Sender- und/oder Empfangseinheit | | |
| 69 | Sender- und/oder Empfangseinheit | | |
| 70 | Leiterschleife | | |
| 71 | Sender- und/oder Empfangseinheit | | |
| 71a | Sender- und/oder Empfangseinheit | | |
| 72 | Sender- und/oder Empfangseinheit | | |
| 73 | Leiterschleife | | |

## Patentansprüche

1. Teleskopschubarm (11a a, 11b) für eine auf einer vertikal und/oder horizontal verstellbaren Hubplattform (8) eines Förderfahrzeuges angeordnete Lastaufnahmevorrichtung (9) zum Ein- bzw. Auslagern eines Ladehilfsmittels (12) in ein bzw. aus einem Regallager (3a, 3b), mit einem Tragrahmen (14a, 14b) und wenigstens einem zu diesem relativ verstellbaren Schlitten (15a, 15b), welcher Schlitten (15a, 15b) mit zumindest einem Stellantrieb (50a bis 50f) und/oder zumindest einem Sensor (51) versehen ist, wobei der Stellantrieb (50a bis 50f) und/oder Sensor (51) über ein Übertragungsmittel (60) für elektrische Energie und/oder elektrische Signale mit einer im Bereich des Tragrahmens (14a, 14b) angeordneten, elektrischen Schnittstelle (52) verbunden ist, **dadurch gekennzeichnet, dass** das Übertragungsmittel (60) für elektrische Energie und/oder elektrische Signale durch wenigstens eine erste Sender- und/oder Empfangseinheit (61) und wenigstens eine zweite Sender- und/oder Empfangseinheit (62) gebildet ist, welche Sender- und/oder Empfangseinheiten (61, 62) baulich voneinander getrennt in geringem Abstand und zwischen dem Tragrahmen (14a, 14b) und Schlitten (15a, 15b) angeordnet sind sowie in Wirkverbindung stehen und dass die Energie und/oder Signale für den Stellantrieb (50a bis 50t) und/oder Sensor (51) von der Schnittstelle (52) zu Anschlüsseln vom Stellantrieb (50a bis 50f) und/oder Sensor (51) und gegebenenfalls umgekehrt über die einander zugeordneten Sender- und/oder Empfangseinheiten (61, 62) auf berührungslosern, insbesondere elektromagnetischem, Wege übertragbar ist.

2. Teleskopschubarm nach Anspruch 1, **dadurch gekennzeichnet, dass** die erste Senderund/oder Empfangseinheit (61) am Tragrahmen (14a, 14b) oder am Schlitten (15a, 15b) und die zweite Sender- und/oder Empfangseinheit (62) am Schlitten (15a, 15b) oder am Tragrahmen (14a, 14b) angeordnet sind.

3. Teleskopschubarm nach Anspruch 1 oder 2, **dadurch gekennzeichnet, dass** der Tragrahmen (14a, 14b) zumindest in seinem in Ausfahrrichtung (19a; 19b) des Schlittens (15a, 15b) betrachtet, vorderen Endbereich (27a; 27b) mit der ersten Sender- und/oder Empfangseinheit (61) versehen ist.

4. Teleskopschubarm nach Anspruch 1 oder 3, **dadurch gekennzeichnet, dass** der Schlitten (15a, 15b) zumindest in seinem in Ausfahrrichtung (19a; 19b) gegenüberliegenden Endbereich (25a; 25b) mit der zweiten Sender- und/oder Empfangseinheit (62) versehen ist.

5. Teleskopschubarm nach Anspruch 1, **dadurch gekennzeichnet, dass** der wenigstens eine Schlitten (15a, 15b) in Bezug auf die Hubplattform (8) nach beide Richtungen ausfahrbar ist und in seiner Längserstreckung in einander gegenüberliegenden Endbereichen (25a, 25b) jeweils mit zumindest einer zweiten Sender- und/oder Empfangseinheit (62, 62a) versehen ist.

6. Teleskopschubarm nach Anspruch 1, **dadurch gekennzeichnet, dass** der wenigstens eine Schlitten (15a, 15b) in Bezug auf die Hubplattform (8) nach beide Richtungen ausfahrbar ist und der Tragrahmen (14a, 14b) in seinen einander gegenüberliegenden Endbereichen (27a, 27b) jeweils mit zumindest einer ersten Sender- und/oder Empfangseinheit (61) versehen ist.

7. Teleskopschubarm nach Anspruch 1, **dadurch gekennzeichnet, dass** wenigstens ein Zwischenschlitten (21a, 21b) zwischen dem Tragrahmen (14a, 14b) und dem Schlitten (15a, 15b) angeordnet ist, wobei der Schlitten (15a, 15b) und Zwischenschlitten (21a, 21b) relativ zum Tragrahmen (14a, 14b) verstellbar und der Schlitten (15a, 15b) und Zwischenschlitten (21a, 21b) relativ zueinander verstellbar sind, wobei der Zwischenschlitten (21a, 21b), Schlitten (15a, 15b) und der Tragrahmen (14a, 14b) untereinander geführt sind und dass zwischen dem Tragrahmen (14a, 14b) und Zwischenschlitten (21a; 21b) eine erste und zweite Sender- und/oder Empfangseinheit (61, 62) sowie zwischen dem Schlitten (15a, 15b) und Zwischenschlitten (21a, 21b) eine dritte und vierte - Sender- und/oder Empfangseinheit (69, 68) angeordnet sind, wobei die erste und zweite Sender- und/oder Empfangseinheit (61, 62) und die dritte und vierte Sender- und/oder Empfangseinheit (69, 68) in Wirkverbindung stehen.

8. Teleskopschubarm nach Anspruch 7, **dadurch gekennzeichnet, dass** der Tragrahmen (14a, 14b) die erste Sender- und/oder Empfangseinheit (61), der Zwischenschlitten (21a, 21b) die zweite und dritte Sender- und/oder Empfangseinheit (62, 69) und der Schlitten (15a, 15b) die vierte Sender- und/oder Empfangseinheit (68) umfasst, wobei die zweite und vierte Sender- und/oder Empfangseinheit (62, 68) vom Zwischenschlitten (21a, 21b) und Schlitten (15a, 15b) jeweils in seinem in Ausfahrrichtung (19a; 19b) betrachtet gegenüberliegenden Endbereich (25a; 25b) angeordnet ist oder der Zwischenschlitten (21a, 21b) und Schlitten (15a, 15b) jeweils in dessen beiden einander gegenüberliegenden, stirnseitigen Endbereichen (24a, 24b, 25a, 25b) eine zweite und vierte Sender- und/oder Empfangseinheit (62, 68) aufweisen.

9. Teleskopschubarm nach Anspruch 1, **dadurch gekennzeichnet, dass** zwei Zwischenschlitten (21a, 21b, 26a, 26b) zwischen dem Tragrahmen (14a, 14b) und Schlitten (15a, 15b) angeordnet sind, wobei die Zwischenschlitten (21a, 21b, 26a, 26b) relativ zum Tragrahmen (14a, 14b) und der Schlitten (15a, 15b) und die Zwischenschlitten (21a, 21b, 26a, 26b) relativ zueinander verstellbar sind, wobei die Zwischenschlitten (21a, 21b, 26a, 26b), der Schlitten (15a, 15b) und der Tragrahmen (14a 14b) untereinander geführt sind und dass zwischen dem Tragrahmen (14a, 14b) und dem zum Tragrahmen (14a, 14b) benachbarten, ersten Zwischenschlitten (21a, 21b) eine erste und zweite Sender- und/oder Empfangseinheit (61, 62), zwischen den Zwischenschlitten (21a, 21b, 26a, 26b) eine dritte und vierte Sender- und/oder Empfangseinheit (69, 68) sowie zwischen dem zum Schlitten (15a, 15b) benachbarten, zweiten Zwischenschlitten (26a, 26b) und Schlitten (15a, 15b) eine fünfte und sechste Sender- und/oder Empfangseinheit (72, 71) angeordnet sind, wobei die erste und zweite Sender- und/oder Empfangseinheit (61, 62) und die dritte und vierte Sender- und/oder Empfangseinheit (69, 68) und die fünfte und sechste Sender- und/oder Empfangseinheit (72, 71) in Wirkverbindung stehen.

10. Teleskopschubarm nach Anspruch 9, **dadurch gekennzeichnet, dass** der Tragrahmen (14a, 14b) die erste Sender- und/oder Empfangseinheit (61), der erste Zwischenschlitten (21a, 21b) die zweite und dritte Sender- und/oder Empfangseinheit (62, 69), der zweite Zwischenschlitten (21a, 21b) die vierte und fünfte Sender- und/oder Empfangseinheit (68, 72) und der Schlitten (15a, 15b) die sechste Sender- und/oder Empfangseinheit (71) umfasst, wobei die zweite, vierte und sechste Sender- und/oder Empfangseinheit (62, 68, 71) von den Zwischenschlitten (21a, 21b) und Schlitten (15a, 15b) jeweils in seinem in Ausfahrrichtung (19a; 19b) des Schlittens (15a, 15b) gegenüberliegenden Endbereich (25a; 25b) angeordnet ist oder der Zwischenschlitten (21a, 21b) und Schlitten (15a, 15b) in dessen beiden einander gegenüberliegenden, stirnseitigen Endbereichen (25a, 25b) je eine zweite, vierte und sechste Sender- und/oder Empfangseinheit (62, 68, 71) aufweisen.

11. Teleskopschubarm nach einem der Ansprüche 1 bis 10, **dadurch gekennzeichnet, dass** die erste, dritte und fünfte Sender- und/oder Empfangseinheit (61, 69, 72) durch wenigstens eine Leiterschleife (63, 70, 73) und die zweite, vierte und sechste Senderund/oder Empfangseinheit (62, 68, 71) durch wenigstens eine auf zumindest einem, insbesondere ferromagnetischen Kern (64) angeordnete Spule (65) gebildet sind, wobei je eine Leiterschleife (63, 70, 73) und eine Spule (65) magnetisch miteinander gekoppelt sind und das in der stromdurchflossenen Leiterschleife (63, 70, 73) erzeugte Magnetfeld die dieser zugeordnete Spule (65) durchsetzt

12. Teleskopschubarm nach einem der Ansprüche 1 bis 10, **dadurch gekennzeichnet, dass** die erste, dritte und fünfte Sender- und/oder Empfangseinheit (61, 69, 72) durch zwei Leiterschleifen (63, 63a, 70, 70a, 73, 73a) und die zweite, vierte und sechste Senderund/oder Empfangseinheit (62, 68, 71) durch zwei auf zumindest einem offenen, ferromagnetischen Kern (64) angeordnete Spulen (65, 65a) gebildet sind und dass mittels der ersten Leiterschleife (63, 70, 73) und ersten Spule (65) die Energie und der zweiten Leiterschleife (63a, 70a, 73a) und zweiten Spule (65a) die Signale getrennt übertragbar sind, wobei je eine Leiterschleife (63, 63a, 70, 70a, 73, 73a) und eine Spule (65) magnetisch miteinander gekoppelt sind und das in der stromdurchflossenen Leiterschleife (63, 63a, 70, 70a, 73, 73a) erzeugte Magnetfeld die dieser zugeordnete Spule (65, 65a) durchsetzt.

13. Teleskopschubarm nach Anspruch 12, **dadurch gekennzeichnet, dass** die Leiterschleife (63, 63a, 70, 70a, 73, 73a) annähernd der Länge des Tragrahmens (14a, 14b) und Zwischenschlittens (21a, 21b, 26a, 26b) entspricht.

14. Teleskopschubarm nach Anspruch 10 oder 11, **dadurch gekennzeichnet, dass** eine Länge der Spule (65, 65a) nur einem Bruchteil der Länge (46) der Leiterschleife (63, 63a, 70, 70a, 73, 73a) entspricht.

15. Lastaufnahmevorrichtung (9) zur Lastaufnahme oder Lastabgabe von Ladehilfsmitteln (12), insbesondere für ein Förderfahrzeug, z.B. Regalbediengerät (6), eines Lagersystems (1), mit zwei zueinander parallel verlaufenden, im Abstand voneinander angeordneten und quer zu einer Gasse (2) synchron ausfahrbaren Teleskopschubarmen (11a, 11b), **dadurch gekennzeichnet, dass** die Teleskopschubarme (11a, 11b) nach einem der Ansprüchen 1 bis 14 ausgebildet sind.
